# EUROPEAN PATENT SPECIFICATION

(11) **EP 4 414 941 B1**
(45) Date of publication and mention of the grant of the patent: **16.09.2026**
(21) Application number: 22918530.1
(22) Date of filing: 30.12.2022
(51) Int. Cl.: G06T 19/00, G06T 7/73, G06V 20/20

(54) **AUGMENTED REALITY SYSTEM, AUGMENTED REALITY SCENARIO POSITIONING METHOD, AND DEVICE**
SYSTEM FÜR ERWEITERTE REALITÄT, VERFAHREN ZUR POSITIONIERUNG EINES SZENARIOS FÜR ERWEITERTE REALITÄT UND VORRICHTUNG
SYSTÈME DE RÉALITÉ AUGMENTÉE, PROCÉDÉ DE POSITIONNEMENT DE SCÉNARIO DE RÉALITÉ AUGMENTÉE ET DISPOSITIF

(30) Priority: 06.01.2022 CN 202210010548
(43) Date of publication of application: 14.08.2024
(60) Divisional application: 26198329.0
(73) Proprietor: Huawei Technologies Co., Ltd., Longgang District Shenzhen, Guangdong 518129 (CN)
(72) Inventor: WEN, Yuxiang, Shenzhen Guangdong 518129 (CN); HE, Kaiwen, Shenzhen Guangdong 518129 (CN); ZHENG, Ya, Shenzhen Guangdong 518129 (CN); LI, Jiangwei, Shenzhen Guangdong 518129 (CN); TANG, Zhongwei, Shenzhen Guangdong 518129 (CN)
(74) Representative: Gill Jennings & Every LLP
(86) International application number: PCT/CN2022/144272
(87) International publication number: WO 2023/131089

(56) References cited:
- CN-A- 111 551 188
- CN-A- 111 551 188
- CN-A- 112 598 732
- CN-A- 112 729 327
- CN-A- 113 672 756
- US-A1- 2011 141 141
- US-A1- 2018 342 100
- US-A1- 2020 401 617

## Description

### TECHNICAL FIELD

This application relates to the field of augmented reality technologies, and in particular, to an augmented reality system, an augmented reality scene locating method, and a device.

### BACKGROUND

Augmented reality (augmented reality, AR) is a technology that integrates real-world information and virtual-world information for display. In the AR technology, virtual information may be obtained by simulating entity information that is difficult to experience in the real world, and the virtual information is applied to the real world. In this way, a real environment and a virtual object can be superimposed in an identical image or space in real time and perceived by a user, to create sensory experience beyond reality.

The user may simultaneously observe the real world and the virtual object in an AR scene displayed on a display of an AR device. For example, on the display of the AR device, the user observes objects in the real world, including the ground, a desk, and the like; and may further observe the virtual object such as a cartoon character placed on the ground.

The user may carry the AR device to play in a plurality of areas in the real world, to experience AR scenes in different areas.

CN111551188A discloses a navigation route generation method and device, and the method comprises the steps: obtaining a real scene image photographed by AR equipment; determining current position information of the user and information of a target amusement park based on the real scene image; sending candidate amusement item information corresponding to the information of the target amusement park to AR equipment, and obtaining target amusement item information selected by the user from the candidate amusement item information; generating a navigation route based on the target amusement project information and the current position information of the user; and generating AR display data integrating the navigation route into a real scene, and sending the AR display data to AR equipment.

### SUMMARY

This application provides an augmented reality system, an augmented reality scene locating method, and a device.

According to a first aspect, this application provides an augmented reality system. The augmented reality system includes an electronic device and a server.

The electronic device is configured to: send a first user image and an identifier of a target scene to the server in response to a first instruction triggered by a user, where the first instruction is an instruction that is triggered by the user and that is for selecting the target scene from a plurality of candidate scenes, and the first user image is an image obtained by the electronic device through photographing an environment at which the device is currently located; receive a first relative location sent by the server, where the first relative location is a location of the electronic device relative to a target geographical location, and the target geographical location is a geographical location of a real environment corresponding to the target scene; and determine a target route based on the first relative location, where the target route is a route from a current location of the electronic device to the target geographical location.

The server is configured to: receive the first user image and the identifier of the target scene that are sent by the electronic device; determine a plurality of panoramas of the target scene based on the identifier of the target scene; determine the first relative location based on the first user image and the plurality of panoramas of the target scene, and send the first relative location to the electronic device.

Based on the foregoing system, after the electronic device receives the first instruction that is triggered by the user and that is for selecting the target scene, the electronic device sends the first user image and the identifier of the target scene to the server, so that the server may accurately locate the electronic device based on the plurality of panoramas of the target scene and the first user image, and determine the first relative location of the electronic device relative to the geographical location of the real environment corresponding to the target scene. The electronic device may determine, based on the first relative location, the target route from the current location to the geographical location corresponding to the target scene, and may accurately guide the user holding the electronic device to search for the target scene, and enter and play in the target scene for a plurality of times.

In a possible design, the server is specifically configured to: perform feature extraction on the first user image, and determine global feature information of the first user image; determine a plurality of target panorama slices from panorama slices of the plurality of panoramas of the target scene based on the global feature information of the first user image, where a similarity between global feature information of each target panorama slice and the global feature information of the first user image is greater than a preset threshold; obtain target pose information of each target panorama slice, where the target pose information of each target panorama slice indicates a location and an azimuth that are of the electronic device in a real world when the electronic device photographs the target panorama slice; and determine the first relative location based on target pose information of the plurality of target panorama slices.

In the design, the server may determine, from the panorama slices of the plurality of panoramas of the target scene based on the global feature information of the first user image, the target panorama slices whose global feature information is similar to that of the first user image, and accurately determines, through visual triangulation positioning based on the target pose information of the target panorama slices, the first relative location that is of the electronic device relative to the target geographical location and that is when the electronic device photographs the first user image.

In a possible design, the first relative location includes an angle range and a distance range of the electronic device relative to the target geographical location.

The electronic device is specifically configured to: select any angle value from the angle range, and select any distance value from the distance range; and determine the target route based on the selected angle value and the selected distance value.

In the design, the first relative location includes the angle range and the distance range of the electronic device relative to the target geographical location. The electronic device may select any angle value and any distance value to determine the target route. After moving based on the target route, the user holding the electronic device may move to an area of the real environment corresponding to the target scene.

In a possible design, the electronic device is further configured to: render a navigation arrow based on the target route, and display an environment image currently photographed by the electronic device and the navigation arrow.

In the design, the electronic device may display the navigation arrow corresponding to the target route, to guide, in an image form, the user holding the electronic device to move, thereby improving user experience.

In a possible design, the electronic device is further configured to: receive a three-dimensional map that is of the target scene and that is created by the server, and capture the plurality of panoramas of the target scene, where each panorama includes a plurality of panorama slices; and send the plurality of panoramas of the target scene to the server.

The server is further configured to: receive the plurality of panoramas uploaded by the electronic device, perform feature extraction on the plurality of panorama slices of each panorama, and determine global feature information of each panorama slice; and determine target pose information of each panorama slice based on the three-dimensional map of the target scene and the global feature information of each panorama slice.

In the design, after receiving the three-dimensional map created by the server, the electronic device may capture the plurality of panoramas of the real environment corresponding to the target scene, and determine the target pose information of each panorama slice, so that after the user uploads the first user image, the visual triangulation positioning may be performed on the electronic device based on the target pose information of the panorama slices of the target scene, to accurately determine a relative location of the electronic device relative to the target geographical location of the target scene.

In a possible design, the server is specifically configured to: obtain a plurality of environment images corresponding to the target scene, and global feature information and a feature point of each environment image; extract global feature information and a feature point of a first panorama slice, where the first panorama slice is any panorama slice of the plurality of panoramas; determine, based on the global feature target of the first panorama slice, at least one environment image matching the first panorama slice, determine a three-dimensional point that is in the three-dimensional map and that corresponds to a feature point of the at least one environment image matching the first panorama slice, and use the determined three-dimensional point as a three-dimensional point corresponding to the feature point of the first panorama slice; and determine target pose information of the first panorama slice based on the feature point of the first panorama slice, the three-dimensional point corresponding to the feature point of the first panorama slice, and an intrinsic camera parameter of the electronic device.

In the design, the server may determine the target pose information of each panorama slice, so that after receiving the first user image, the server may use a visual triangulation positioning method to locate the electronic device.

In a possible design, the electronic device is further configured to: capture a second user image after moving to the target geographical location, where the second user image is an image obtained by the electronic device through photographing an environment at which the device is located after the electronic device moves to the target geographical location; send the second user image to the server, and receive a second relative location returned by the server, where the second relative location is a location of the electronic device in a three-dimensional coordinate system of the three-dimensional map; and display the target scene based on the second relative location, the three-dimensional map, and the environment image captured by the electronic device in real time.

The server is further configured to: receive the second user image uploaded by the electronic device; and determine the second relative location of the electronic device based on a GVPS algorithm and the second user image, and send the second relative location to the electronic device.

In the design, after the user holding the electronic device enters the area of the real environment corresponding to the target scene, the electronic device may capture and send the second user image to the server. The server may determine the location of the electronic device in the three-dimensional coordinate system of the three-dimensional map based on the GVPS algorithm, and the electronic device may display the target scene based on the location in the three-dimensional coordinate system of the three-dimensional map. This enables the real environment photographed by the electronic device and a virtual object placed by the user that are seen by the user when the user plays in the target scene to be more real, thereby improving user experience.

According to a second aspect, this application provides an augmented reality scene locating method, applied to an augmented reality system. The augmented reality system includes an electronic device and a server, and the method includes the following steps.

The electronic device sends a first user image and an identifier of a target scene to the server in response to a first instruction triggered by a user, where the first instruction is an instruction that is triggered by the user and that is for selecting the target scene from a plurality of candidate scenes, and the first user image is an image obtained by the electronic device through photographing an environment at which the device is currently located. The server receives the first user image and the identifier of the target scene that are sent by the electronic device. The server determines a plurality of panoramas of the target scene based on the identifier of the target scene. The server determines a first relative location based on the first user image and the plurality of panoramas of the target scene, where the first relative location is a location of the electronic device relative to a target geographical location, and the target geographical location is a geographical location of a real environment corresponding to the target scene. The server sends the first relative location to the electronic device. The electronic device determines a target route based on the first relative location, where the target route is a route from a current location of the electronic device to the target geographical location.

In a possible design, the determining, by the server, a first relative location based on the first user image and the plurality of panoramas of the target scene includes: The server performs feature extraction on the first user image, and determines global feature information of the first user image. The server determines a plurality of target panorama slices from panorama slices of the plurality of panoramas of the target scene based on the global feature information of the first user image, where a similarity between global feature information of each target panorama slice and the global feature information of the first user image is greater than a preset threshold. The server obtains target pose information of each target panorama slice, where the target pose information of each target panorama slice indicates a location and an azimuth that are of the electronic device in a real world when the electronic device photographs the target panorama slice. The server determines the first relative location based on target pose information of the plurality of target panorama slices.

In a possible design, the first relative location includes an angle range and a distance range of the electronic device relative to the target geographical location. The determining, by the electronic device, a target route based on the first relative location includes: The electronic device selects any angle value from the angle range, and selects any distance value from the distance range. The electronic device determines the target route based on the selected angle value and the selected distance value.

In a possible design, the method further includes: The electronic device renders a navigation arrow based on the target route, and displays an environment image currently photographed by the electronic device and the navigation arrow.

In a possible design, the method further includes: The electronic device receives a three-dimensional map that is of the target scene and that is created by the server, and captures the plurality of panoramas of the target scene, where each panorama includes a plurality of panorama slices. The electronic device sends the plurality of panoramas of the target scene to the server. The server performs feature extraction on the plurality of panorama slices of each panorama, and determines global feature information of each panorama slice. The server determines target pose information of each panorama slice based on the three-dimensional map of the target scene and the global feature information of each panorama slice.

In a possible design, the determining, by the server, target pose information of each panorama slice based on the three-dimensional map of the target scene and the global feature information of each panorama slice includes: The server obtains a plurality of environment images corresponding to the target scene, and global feature information and a feature point of each environment image. The server extracts global feature information and a feature point of a first panorama slice, where the first panorama slice is any panorama slice of the plurality of panoramas. The server determines, based on the global feature target of the first panorama slice, at least one environment image matching the first panorama slice, and determines a three-dimensional point that is in the three-dimensional map and that corresponds to a feature point of the at least one environment image matching the first panorama slice. The server uses the determined three-dimensional point as a three-dimensional point corresponding to the feature point of the first panorama slice. The server determines target pose information of the first panorama slice based on the feature point of the first panorama slice, the three-dimensional point corresponding to the feature point of the first panorama slice, and an intrinsic camera parameter of the electronic device.

In a possible design, the method further includes: The electronic device captures a second user image after moving to the target geographical location, where the second user image is an image obtained by the electronic device through photographing an environment at which the device is located after the electronic device moves to the target geographical location. The electronic device sends the second user image to the server. The server determines a second relative location of the electronic device based on a GVPS algorithm and the second user image, and sends the second relative location to the electronic device, where the second relative location is a location of the electronic device in a three-dimensional coordinate system of the three-dimensional map of the target scene. The electronic device displays the target scene based on the second relative location, the three-dimensional map, and the environment image captured by the electronic device in real time.

According to a third aspect, this application provides an augmented reality scene locating method, applied to a server. The method includes:
receiving a first user image and an identifier of a target scene that are sent by an electronic device, where the first user image is an image obtained by the electronic device through photographing an environment at which the device is currently located, the target scene is determined by the electronic device in response to a first instruction, and the first instruction is an instruction that is triggered by a user and that is for selecting the target scene from a plurality of candidate scenes; determining a plurality of panoramas of the target scene based on the identifier of the target scene; determining a first relative location based on the first user image and the plurality of panoramas of the target scene, where the first relative location is a location of the electronic device relative to a target geographical location, and the target geographical location is a geographical location of a real environment corresponding to the target scene; and sending the first relative location to the electronic device, to enable the electronic device to determine a target route based on the first relative location, where the target route is a route from a current location of the electronic device to the target geographical location.

In a possible design, the determining a first relative location based on the first user image and the plurality of panoramas of the target scene includes: performing feature extraction on the first user image, and determining global feature information of the first user image; determining a plurality of target panorama slices from panorama slices of the plurality of panoramas of the target scene based on the global feature information of the first user image, where a similarity between global feature information of each target panorama slice and the global feature information of the first user image is greater than a preset threshold; obtaining target pose information of each target panorama slice, where the target pose information of each target panorama slice indicates a location and an azimuth that are of the electronic device in a real world when the electronic device photographs the target panorama slice; and determining the first relative location based on target pose information of the plurality of target panorama slices.

In a possible design, the first relative location includes an angle range and a distance range of the electronic device relative to the target geographical location, and the target route is determined by the electronic device based on any angle value from the angle range and any distance value from the distance range.

In a possible design, before the receiving a first user image and an identifier of a target scene that are sent by an electronic device, the method further includes: sending, to the electronic device, a three-dimensional map that is of the target scene and that is created by the server, and receiving the plurality of panoramas that are of the target scene and that are sent by the electronic device, where each panorama includes a plurality of panorama slices; performing feature extraction on the plurality of panorama slices of each panorama, and determining global feature information of each panorama slice; and determining target pose information of each panorama slice based on the three-dimensional map of the target scene and the global feature information of each panorama slice.

In a possible design, the determining target pose information of each panorama slice based on the three-dimensional map of the target scene and the global feature information of each panorama slice includes: obtaining a plurality of environment images corresponding to the target scene, and global feature information and a feature point of each environment image; extracting global feature information and a feature point of a first panorama slice, where the first panorama slice is any panorama slice of the plurality of panoramas; determining, based on the global feature target of the first panorama slice, at least one environment image matching the first panorama slice, determining a three-dimensional point that is in the three-dimensional map and that corresponds to a feature point of the at least one environment image matching the first panorama slice, and using the determined three-dimensional point as a three-dimensional point corresponding to the feature point of the first panorama slice; and determining target pose information of the first panorama slice based on the feature point of the first panorama slice, the three-dimensional point corresponding to the feature point of the first panorama slice, and an intrinsic camera parameter of the electronic device.

In a possible design, the method further includes: receiving a second user image sent by the electronic device, where the second user image is an image obtained by the electronic device through photographing an environment at which the device is located after the electronic device moves to the target geographical location; and determining a second relative location of the electronic device based on a GVPS algorithm and the second user image, and sending the second relative location to the electronic device, where the second relative location is a location of the electronic device in a three-dimensional coordinate system of the three-dimensional map of the target scene, to enable the electronic device to display the target scene based on the second relative location, the three-dimensional map, and the environment image captured by the electronic device in real time.

According to a fourth aspect, this application provides an augmented reality scene locating method, applied to an electronic device. The method includes:
sending a first user image and an identifier of a target scene to a server in response to a first instruction triggered by a user, where the first instruction is an instruction that is triggered by the user and that is for selecting the target scene from a plurality of candidate scenes, and the first user image is an image obtained by the electronic device through photographing an environment at which the device is currently located; receiving a first relative location sent by the server, where the first relative location is a location of the electronic device relative to a target geographical location, the target geographical location is a geographical location of a real environment corresponding to the target scene, and the first relative location is determined by the server based on the first user image and a plurality of panoramas of the target scene; and determining a target route based on the first relative location, where the target route is a route from a current location of the electronic device to the target geographical location.

In a possible design, the first relative location includes an angle range and a distance range of the electronic device relative to the target geographical location. The determining a target route based on the first relative location includes: selecting any angle value from the angle range, and selecting any distance value from the distance range; and determining, by the electronic device, the target route based on the selected angle value and the selected distance value.

In a possible design, the method further includes: rendering a navigation arrow based on the target route, and displaying an environment image currently photographed by the electronic device and the navigation arrow.

In a possible design, before the sending a first user image and an identifier of a target scene to a server in response to a first instruction triggered by a user, and the method further includes: The electronic device receives a three-dimensional map that is of the target scene and that is created by the server, and captures the plurality of panoramas of the target scene, where each panorama includes a plurality of panorama slices. The electronic device sends the plurality of panoramas of the target scene to the server, to enable the server to determine global feature information of each panorama slice and target pose information of each panorama slice, where target pose information of a plurality of panorama slices of the plurality of panoramas is for locating the electronic device.

In a possible design, the method further includes: capturing a second user image after moving to the target geographical location, where the second user image is an image obtained by the electronic device through photographing an environment at which the device is located after the electronic device moves to the target geographical location; sending the second user image to the server, to enable the server to determine a second relative location of the electronic device based on a GVPS algorithm and the second user image, where the second relative location is a location of the electronic device in a three-dimensional coordinate system of the three-dimensional map of the target scene; and receiving the second relative location sent by the server, and displaying the target scene based on the second relative location, the three-dimensional map, and the environment image captured by the electronic device in real time.

According to a fifth aspect, this application provides an electronic device. The electronic device includes a plurality of functional modules. The plurality of functional modules interact with each other, to implement the method performed by the electronic device according to any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a sixth aspect, this application provides an electronic device, including at least one processor and at least one memory. The at least one memory stores computer program instructions. When the electronic device runs, the at least one processor performs the method performed by the electronic device according to any one of the foregoing aspects and the implementations of the foregoing aspects.

According to a seventh aspect, this application provides a server. The server includes a plurality of functional modules. The plurality of functional modules interact with each other, to implement the method performed by the server according to any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to an eighth aspect, this application provides a server, including at least one processor and at least one memory. The at least one memory stores computer program instructions. When the server runs, the at least one processor performs the method performed by the server according to any one of the foregoing aspects and the implementations of the foregoing aspects.

According to a ninth aspect, this application further provides a computer program. When the computer program is run on a computer, the computer is enabled to perform the method performed by the electronic device or the server according to any one of the foregoing aspects and the implementations of the foregoing aspects.

According to a tenth aspect, this application further provides a computer-readable storage medium. The computer-readable storage medium stores a computer program. When the computer program is executed by a computer, the computer is enabled to perform the method performed by the electronic device or the server according to any one of the foregoing aspects and the implementations of the foregoing aspects.

According to an eleventh aspect, this application further provides a chip. The chip is configured to: read a computer program stored in a memory, and perform the method performed by the electronic device or the server according to any one of the foregoing aspects and the implementations of the foregoing aspects.

According to a twelfth aspect, this application further provides a chip system. The chip system includes a processor, and is configured to support a computer apparatus in implementing the method performed by the electronic device or the server according to any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a schematic diagram of an AR scene displayed by an electronic device according to an embodiment of this application;
FIG. 2 is a schematic diagram of an augmented reality system according to an embodiment of this application;
FIG. 3 is a schematic diagram of a structure of an electronic device according to an embodiment of this application;
FIG. 4 is a block diagram of a software structure of an electronic device according to an embodiment of this application;
FIG. 5 is a schematic diagram of a structure of a server according to an embodiment of this application;
FIG. 6 is a flowchart of an augmented reality scene locating method according to an embodiment of this application;
FIG. 7 is a schematic diagram of capturing panorama slices according to an embodiment of this application;
FIG. 8 is a schematic diagram of a candidate scene according to an embodiment of this application;
FIG. 9 is a schematic diagram of determining a first relative location of an electronic device based on a VTPS service according to an embodiment of this application;
FIG. 10 is a schematic diagram of a procedure of an augmented reality scene locating method according to an embodiment of this application; and
FIG. 11 is a flowchart of an augmented reality scene locating method according to an embodiment of this application.

### DESCRIPTION OF EMBODIMENTS

Augmented reality (augmented reality, AR) is a technology that integrates real-world information and virtual-world information for display. In the AR technology, virtual information may be obtained by simulating entity information that is difficult to experience in the real world, and the virtual information is applied to the real world. In this way, a real environment and a virtual object can be superimposed in an identical image or space in real time and perceived by a user, to create sensory experience beyond reality.

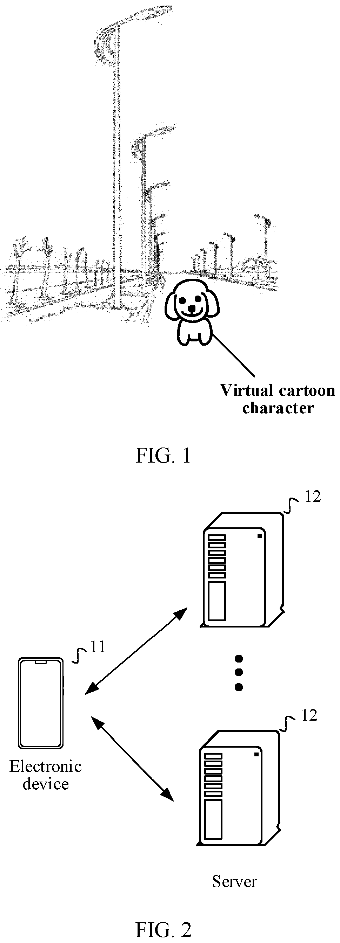

In an embodiment of this application, the user may control an electronic device to capture an environment image of the real world, to generate a three-dimensional map corresponding to the real world. The three-dimensional map may be for constructing an AR scene. When the user photographs the real world in real time via a photographing apparatus of the electronic device, the user may add a virtual object to an AR scene displayed on a display of the electronic device. The electronic device adds the virtual object to the AR scene based on the three-dimensional map corresponding to the real world, and the user may observe, in the same image, the real world and the virtual object added by the user. For example, FIG. 1 is a schematic diagram of an AR scene according to an embodiment of this application. Refer to FIG. 1. The ground and a road in FIG. 1 form an image of the real world actually photographed by a photographing apparatus of an electronic device, and a cartoon character on the road is a virtual object added by a user to a current AR scene. The user may simultaneously observe the real-world ground, the real-world road, and the virtual cartoon character on a display of the electronic device.

Optionally, the user may control the electronic device to generate three-dimensional maps for a plurality of areas in the real world to experience AR scenes in different areas. When the user wants to enter and play in an AR scene again in which a three-dimensional map has been generated, how to search for and enter the AR scene in which the three-dimensional map has been generated becomes a problem to be resolved.

In an implementation, a professional device may be used to capture a panorama sequence of the real world corresponding to the AR scene. The panorama sequence includes real geographical location information and sequence information of a plurality of images. A database that includes the panorama sequence is created in a server, and a relationship between the three-dimensional map and the panorama sequence is stored. When the user searches for an AR scene, the electronic device may search an electronic map of the real world for a location of a focus of the user based on a keyword input by the user, and search, based on location information of the focus, the database for a panorama sequence corresponding to the location information, and display the AR scene on the display of the electronic device. However, this implementation needs to rely on the professional device to capture the panorama sequence, and costs are high.

In another implementation, when generating the three-dimensional map, the electronic device performs feature extraction on an environment image captured by the photographing apparatus of the electronic device, and stores feature information of each image in the database. When the user wants to enter the AR scene corresponding to the three-dimensional map again, the electronic device performs feature extraction on a user image captured by the photographing apparatus of the electronic device at a current location of the user, calculates a similarity between feature information of the user image and feature information of an image in the database, selects location information of an image whose feature information has the highest similarity to the feature information of the user image and that is in the database, uses the selected location information of the image as location information of the user, and display the AR scene based on the location of the user. However, in this implementation, when the electronic device generates the three-dimensional map, density of captured images is limited. Consequently, search precision is low, and the current location of the user cannot be accurately determined.

Based on the foregoing problems, this application provides an augmented reality system, to provide a method for efficiently and accurately searching for and entering an AR scene in which a three-dimensional map has been generated. FIG. 2 is a schematic diagram of an augmented reality system according to an embodiment of this application. Refer to FIG. 2. The augmented reality system includes an electronic device 11 and a server 12. There may be a plurality of servers 12. The plurality of servers 12 may operate in collaboration and interact with the electronic device 11, to implement the augmented reality scene locating method according to this embodiment of this application.

In this embodiment of this application, in response to a first instruction that is triggered by a user and that is for selecting a target scene from a plurality of candidate scenes, the electronic device 11 sends a first user image obtained through photographing by a photographing apparatus to the server 12. The server 12 determines, based on global feature information of the first user image, a plurality of first panoramas from a plurality of panoramas corresponding to the target scene, and determines a first relative location of the electronic device 11 relative to the target scene based on the global feature information of the first user image and local feature information of the plurality of first panoramas. The server 12 sends the first relative location to the electronic device 11. The electronic device 11 determines, based on the first relative location, a target route from a current location of the electronic device 11 to a location corresponding to the target scene. In this solution, the server 12 may accurately locate the electronic device 11 based on the first user image photographed by the photographing apparatus of the electronic device and the panoramas of the target scene, and determine a route from the current location of the electronic device 11 to the location corresponding to the target scene. This may accurately guide the user holding the electronic device 11 to search for the AR scene and enter the AR scene for a plurality of times.

The following describes an electronic device, a server, and an embodiment in which the electronic device and the server are used. The electronic device according to an embodiment of this application may include a photographing apparatus and a display apparatus. For example, the electronic device according to an embodiment of this application may be a tablet computer, a mobile phone, a vehicle-mounted device, an augmented reality (augmented reality, AR) device, a notebook computer, an ultra-mobile personal computer (ultra-mobile personal computer, UMPC), a netbook, a personal digital assistant (personal digital assistant, PDA), a wearable device, or the like. A specific type of the electronic device is not limited in an embodiment of this application.

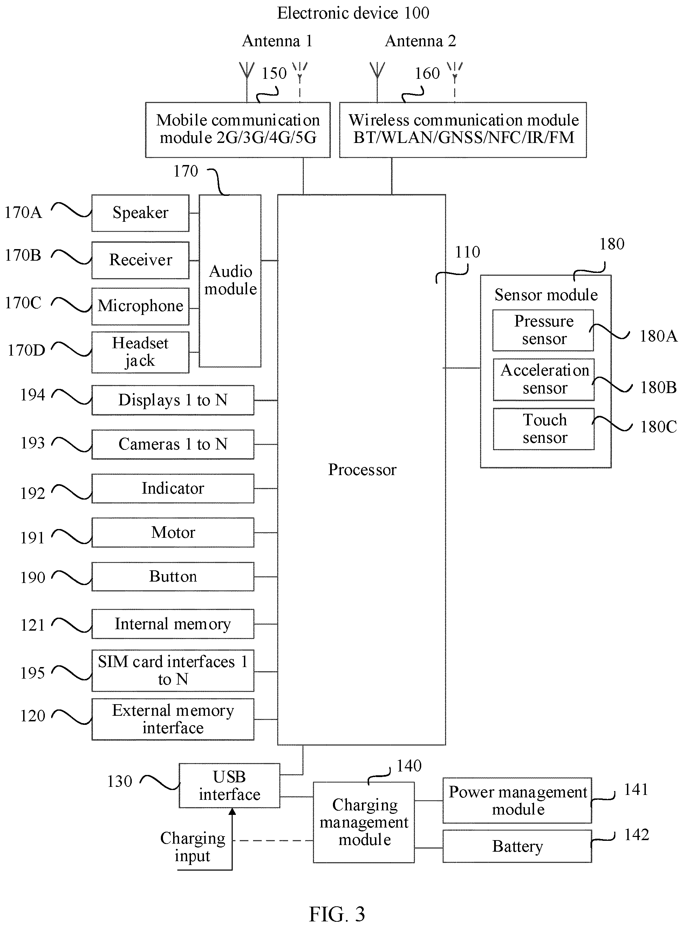

FIG. 3 is a schematic diagram of a structure of an electronic device 100 according to an embodiment of this application. As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB Type C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in an identical component as at least some modules of the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. In an embodiment of this application, the display 194 may be configured to display an AR scene, and the AR scene displayed on the display 194 may include an image photographed in real time by the camera 193 and a virtual object placed by a user in the AR scene.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1. In an embodiment of this application, the camera 193 may capture an image used to construct a three-dimensional map of the AR scene. The camera 193 may also be configured to photograph a panorama. For example, the user holds and rotates the electronic device 100 horizontally by 360 degrees, and the camera 193 may capture a panorama corresponding to a location of the electronic device 100.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, a photographed image or a recorded video) and the like generated when the electronic device 100 is used. In addition, the internal memory 121 may include a high-speed random access memory, or may include a nonvolatile memory, for example, at least one magnetic disk storage component, a flash memory component, or a universal flash storage (universal flash storage, UFS).

The external memory interface 120 may be configured to connect to an external memory card, such as a Micro SD card, to extend a storage capability of the electronic device. The external memory card communicates with the processor 110 through the external memory interface 120, to implement a data storage function. For example, files such as images or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as "a touch control panel". The touch sensor 180C may be disposed on the display 194, and the touch sensor 180C and the display 194 constitute a touchscreen, also referred to as "a touch control screen". The touch sensor 180C is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180C may alternatively be disposed on a surface of the electronic device 100 in a location different from a location of the display 194.

The button 190 includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio play) may correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 3 do not constitute a specific limitation on the electronic device 100. The electronic device may further include more or fewer components than the components shown in the figure, or combine some components, or split some components, or have different component arrangements. In addition, a combination/connection relationship between the components in FIG. 3 may also be adjusted and modified.

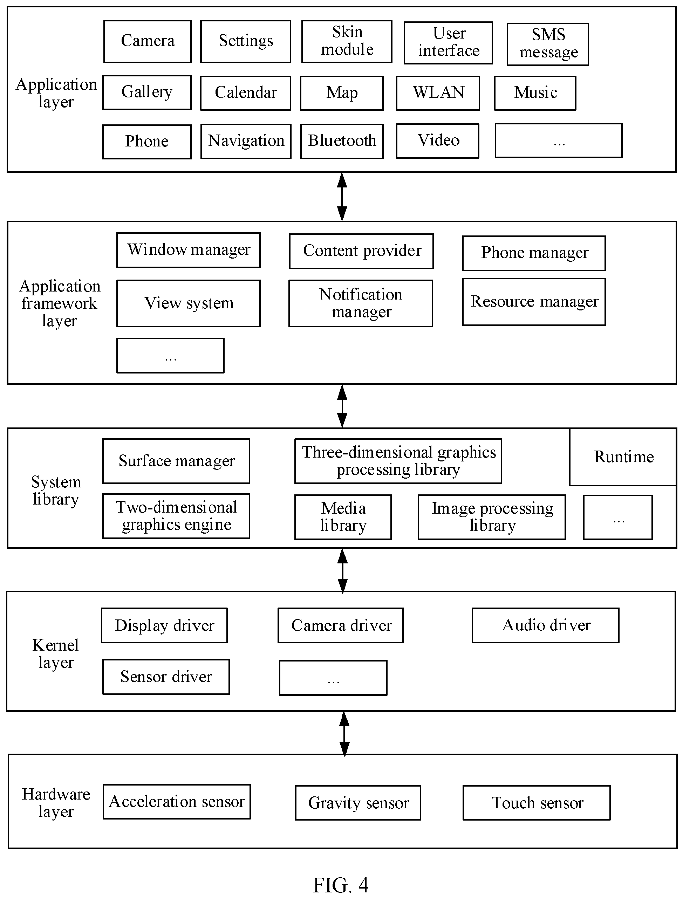

FIG. 4 is a block diagram of a software structure of an electronic device according to an embodiment of this application. As shown in FIG. 4, the software structure of the electronic device may be a layered architecture. For example, software may be divided into several layers, and each layer has a clear role and task. The layers communicate with each other through a software interface. In some embodiments, the operating system is divided into four layers from top to bottom: an application layer, an application framework layer (framework, FWK), a runtime (runtime), a system library, and a kernel layer.

The application layer may include a series of application packages (application packages). As shown in FIG. 4, the application layer may include Camera, Settings, a skin module, a user interface (user interface, UI), a third-party application, and the like. The third-party application may include Gallery, Calendar, Phone, Maps, Navigation, WLAN, Bluetooth, Music, Video, SMS message, and the like.

The application framework layer provides an application programming interface (application programming interface, API) and a programming framework for an application in the application layer. The application framework layer may include some predefined functions. As shown in FIG. 4, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like. The content provider is used to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be used to construct the application. A display interface may include one or more views. For example, a display interface including an SMS message notification icon may include a text display view and an image display view.

The phone manager is used to provide a communication function of the electronic device, for example, management of a call status (including answering, declining, or the like).

The resource manager provides various resources such as a localized character string, an icon, an image, a layout file, and a video file for the application.

The notification manager enables the application to display notification information in a status bar, and may be used to convey a notification message. The notification manager may automatically disappear after a short pause without requiring a user interaction. For example, the notification manager is used to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The runtime includes a kernel library and a virtual machine. The runtime is responsible for scheduling and managing an operating system.

The kernel library includes two parts: a function that needs to be invoked by a Java language, and a kernel library of the operating system. The application layer and the application framework layer run on the virtual machine. The virtual machine executes java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A hardware layer may include various sensors, including an acceleration sensor, a gravity sensor, a touch sensor, and the like.

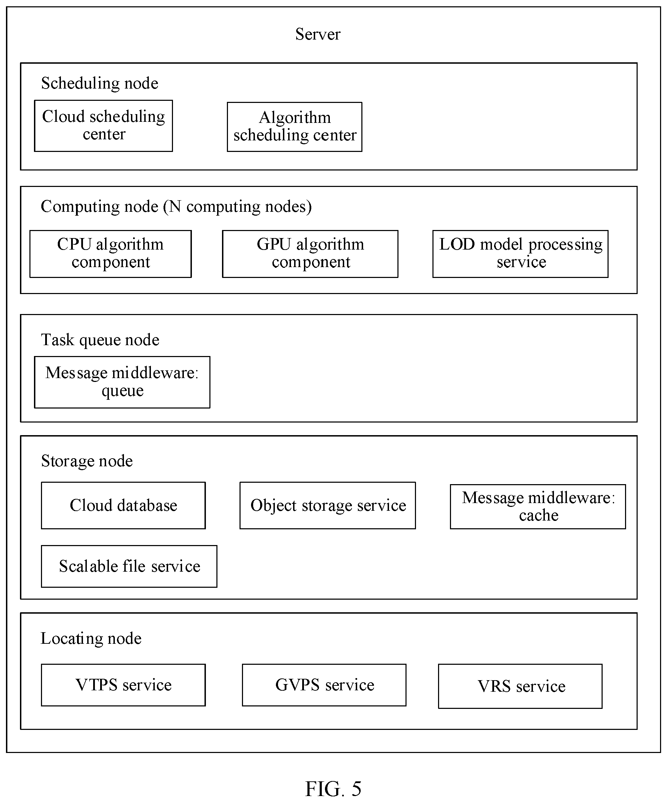

FIG. 5 is a schematic diagram of a structure of a server according to an embodiment of this application. The server according to this embodiment of this application may include a distributed structure. Refer to FIG. 5. The server may include a plurality of computing nodes (N computing nodes included in the server as shown in FIG. 5, where N is a positive integer), at least one storage node, a task queue node, at least one scheduling node, and a locating node. The following describes functions of each node in the server shown in FIG. 5.

The computing node is configured to create a three-dimensional map corresponding to an environment, in a distributed processing manner based on a plurality of photographed images that are uploaded by an electronic device and that are of the real-world environment, and a locating parameter corresponding to each image. Different computing nodes may perform different processing tasks in a three-dimensional map creation process, and the N computing nodes jointly complete the entire three-dimensional map creation process. For example, different computing nodes may separately perform an identical type of processing on different images, so that the processing tasks of the plurality of images are distributed to a plurality of computing nodes for synchronized processing, and an image processing speed is accelerated.

Refer to FIG. 5. The N computing nodes may include a CPU algorithm component and a GPU algorithm component shown in FIG. 5. The server may include a plurality of CPU algorithm components, and may also include a plurality of GPU algorithm components. The GPU algorithm component may be used to perform image processing (including feature extraction, matching, retrieval, and the like) on the plurality of images. The CPU algorithm component may be configured to generate the three-dimensional map based on an image processing result of the GPU algorithm component. The GPU algorithm component and the CPU algorithm component may construct instructions for a map in a message queue, and perform algorithm automatic processing.

In embodiments of this application, the computing node may further include a LOD model processing service. The LOD model processing service is used to simplify a grid uploaded by the electronic device, and generate a LOD model based on a simplified grid.

Certainly, the computing node may alternatively be implemented by another type of algorithm processing component. This is not specifically limited in embodiments of this application.

A task queue node is configured to cache a processing task in queue in the three-dimensional map creation process. Each computing node may read a to-be-performed task from the task queue node, and then perform corresponding processing, to perform a multi-processing task in a distributed and orderly manner.

For example, the task queue node may be implemented by the message queue shown in FIG. 5. The message queue may be used to asynchronously cache a three-dimensional map creation instruction, a task processing instruction in the three-dimensional map creation process, and the like from a plurality of electronic devices, and may share or allocate the instructions to the N computing nodes, so that the N computing nodes share to-be-performed tasks and balance system load.

The at least one storage node is configured to temporarily or permanently store data related to the three-dimensional map creation process. For example, the at least one storage node may store the plurality of images, intermediate data and result data of the corresponding processing performed by the plurality of computing nodes, and the like.

Optionally, refer to FIG. 5. The storage node may include a cloud database, an object storage service, a scalable file service, a distributed cache service, and the like. The cloud database may be configured to store serialized content that is on an electronic device side and that occupies a small storage space, including user information, indication information of task processing in the three-dimensional map creation process, modification information of the three-dimensional map, and the like. The object storage service may be used to store non-serialized content that is related in the electronic device and that occupies a large storage space, including a three-dimensional model, a high-definition image, a video, an animation, and the like. The scalable file service may be used to store data, including map data of the three-dimensional map generated by using a three-dimensional map creation algorithm, an intermediate variable that is of an algorithm and that occupies a large storage space, and the like. The distributed cache service may be configured to asynchronously cache data, including an intermediate variable that can be serialized and that occupies a small storage space in an algorithm processing process, and the like, and share the data with the N computing nodes.

The at least one scheduling node is used to coordinate and manage scheduling of some or all nodes of the N computing nodes, the task queue node, and the at least one storage node.

For example, as shown in FIG. 5, the scheduling node in the server may include a cloud scheduling center and an algorithm scheduling center. The cloud scheduling center may manage and schedule a node such as the algorithm scheduling center, the storage node, and the task queue node, may exchange information and data with the electronic device, and may be used as an efficient message processing and distribution node. For example, the cloud scheduling center can provide an upload address of a plurality of images for the electronic device, receive a scheduling request from the electronic device side, send a request to the cloud database, and return a request result. The algorithm scheduling center is used to manage and schedule the N computing nodes, and may further manage and schedule some other algorithm services.

The locating node is for locating the electronic device based on the images uploaded by the electronic device, to determine a location of the electronic device relative to an AR scene or a location of the electronic device in a coordinate system of the three-dimensional map.

Optionally, the locating node may include a visual triangulation positioning system (visual triangulation positioning system, VTPS) service, a global visual positioning system (global visual positioning system, GVPS) service, and a vector retrieval system (vector retrieval system, VRS) service. The VTPS service may be for determining the location of the electronic device relative to the AR scene based on feature information of a panorama of the AR scene. The GVPS service may be for spatial locating, to determine 6-degrees-of-freedom coordinates of the location, in the created three-dimensional map, corresponding to the current location of the electronic device. The VRS service is for performing a vector search. Optionally, the VTPS service, the GVPS service, and the VRS service may be used as sub-services of the computing node.

Specific functions of each node, service, or component in the foregoing system are described below with reference to a specific embodiment, and are not described in detail herein.

It should be noted that the server shown in FIG. 5 is merely an example for description of a server according to an embodiment of this application, and does not constitute a limitation on an architecture of a server to which the solution according to an embodiment of this application is applicable. In comparison with the structure shown in FIG. 5, some nodes may also be added, deleted or adjusted in the server to which the solution according to an embodiment of this application is applicable. This is not specifically limited in embodiments of this application.

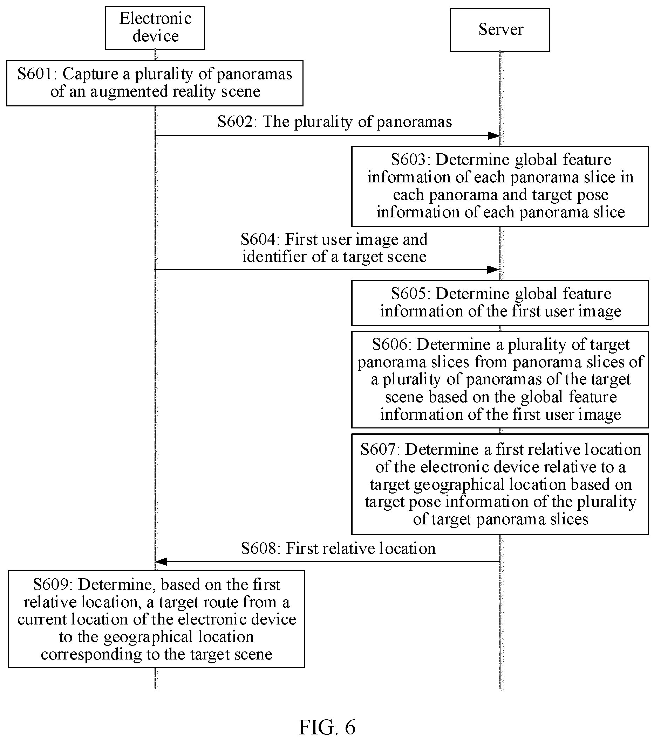

The following further describes the augmented reality scene locating method according to an embodiment of this application. FIG. 6 is a flowchart of an augmented reality scene locating method according to an embodiment of this application. The augmented reality scene locating method shown in FIG. 6 may be applied to the augmented reality system shown in FIG. 2. Refer to FIG. 6. The method includes the following steps.

S601: An electronic device captures a plurality of panoramas of an augmented reality scene when requesting a server to create a three-dimensional map of the augmented reality scene.

In an optional implementation, before a user operates the electronic device to play in the AR scene, the electronic device needs to capture an environment image of the real world corresponding to the AR scene. The electronic device may send the captured environment image to the server. The server may obtain the three-dimensional map of the AR scene by processing the environment image. The three-dimensional map is constituted by a plurality of three-dimensional points. Each three-dimensional point corresponds to one feature point of the environment image. The three-dimensional map may be for constructing the AR scene. For example, the electronic device may display, on a display, an image photographed in real time by a camera. The user may operate to place a virtual object in the displayed image. The electronic device may determine a location of the virtual object in the AR scene based on the three-dimensional map, so that the user can see effect that the real environment and the virtual object are superimposed in an identical image in real time. The virtual object placed by the user in the AR scene may be a three-dimensional digital resource model. The virtual cartoon character in the AR scene as shown in FIG. 1 is a three-dimensional digital resource model obtained through rendering based on a digital resource. In embodiments of this application, the server may send a plurality of digital resources to the electronic device for the user to select to add and play in the AR scene.

In this embodiment of this application, after the electronic device captures and uploads the environment image to the server, the server generates the three-dimensional map based on the environment image uploaded by the electronic device. After the server sends the three-dimensional map to the electronic device, the electronic device may display a message prompting the user to photograph the panoramas. The user may operate the electronic device to capture the panoramas at a plurality of locations. The plurality of panoramas of the AR scene may be for locating the electronic device, so that the user may operate the electronic device to move to a geographical location in the real world corresponding to the AR scene, and the electronic device may display, on the display, the AR scene for the user to play in. Optionally, the electronic device may determine, based on a moving path of the user when the user operates the electronic device to capture the environment image that is used to generate the three-dimensional map, the plurality of locations at which the panoramas are captured. For example, the electronic device may determine the plurality of locations on the moving path of the user capturing the environment image, and guide the user to operate the electronic device to capture the panoramas at the plurality of locations.

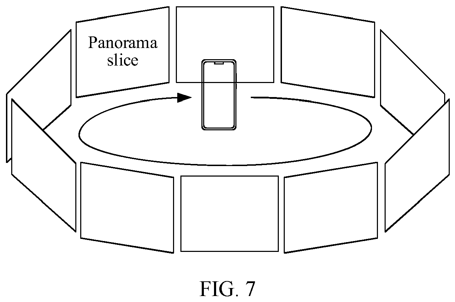

In an optional implementation, when capturing the panoramas, the electronic device may photograph a plurality of panorama slices for each panorama. For example, FIG. 7 is a schematic diagram of capturing panorama slices according to an embodiment of this application. When the user operates the electronic device to photograph a panorama, the user needs to hold the electronic device and stand at a fixed location and rotate the electronic device to photograph the panorama. The electronic device may capture a plurality of panorama slices in a rotation process, and the plurality of panorama slices may be spliced to obtain the panorama.

S602: The electronic device sends the plurality of panoramas of the augmented reality scene to the server.

Optionally, the electronic device may send the plurality of captured panorama slices of each panorama to the server. The electronic device may further send location information of each panorama to the server. The location information of each panorama may include a geographical location of the electronic device when the electronic device captures a panorama, for example, a determined location of the electronic device located based on a locating technology, including a global positioning system (global positioning system, GPS), wireless fidelity (wireless fidelity, Wi-Fi) locating, base station locating, or the like. The location information of each panorama may further include pose information of each panorama slice and inertial measurement unit (inertial measurement unit, IMU) information. The pose information of each panorama slice may be determined by the electronic device based on a simultaneous localization and mapping (simultaneous localization and mapping, SLAM) algorithm.

S603: The server determines global feature information of each panorama slice in each panorama and target pose information of each panorama slice.

In an optional implementation, the global feature information of each panorama slice in each panorama may be a global feature vector of each panorama slice, and the global feature vector may represent an overall structure feature of an image. In implementation, the server may extract and cluster a local feature in an area of good image feature invariance, and then calculate a weighted residual sum of each local vector and a cluster center, to obtain the global feature vector.

Optionally, after receiving the plurality of panorama slices of each panorama, the server may splice the plurality of panorama slices to obtain the panorama.

In some embodiments of this application, the server may determine the target pose information of each panorama slice based on the three-dimensional map of the AR scene. The target pose information is pose information that is of the electronic device relative in a three-dimensional coordinate system of the three-dimensional map and that is when the electronic device photographs the target panorama slice. Because the three-dimensional map of the AR scene corresponds to the real environment, the target pose information may represent a location and an azimuth that are of the electronic device in the real world and that are when the electronic device photographs the target panorama slice.

In specific implementation, when constructing the three-dimensional map, the server may store a plurality of environment images used to construct the three-dimensional map and global feature information of each frame environment image. After receiving the panorama slices sent by the electronic device, the server may determine an environment image similar to the panorama slices based on global feature information of the panorama slices and global feature information of the plurality of environment images corresponding to the AR scene, and determine a matching feature point in the panorama slices and the environment image. The server determines, based on the matching feature point, the three-dimensional point that is in the three-dimensional map and that corresponds to the feature point in the panorama slices, and may determine the target pose information of the panorama slices based on the feature point in the panorama slices, the three-dimensional point corresponding to the feature point, and an intrinsic camera parameter of the electronic device.

In S601 to S603, the server may store the plurality of panoramas of the AR scene, the location information of each panorama, the global feature information of each panorama slice in each panorama, and the target pose information of each panorama slice in each panorama.

S604: The electronic device sends a first user image and an identifier of a target scene to the server in response to a first instruction triggered by the user.

The first instruction may be an instruction that is triggered by the user and that is for selecting the target scene from a plurality of candidate scenes. The first user image may be an environment image photographed in real time by a photographing apparatus of the electronic device.

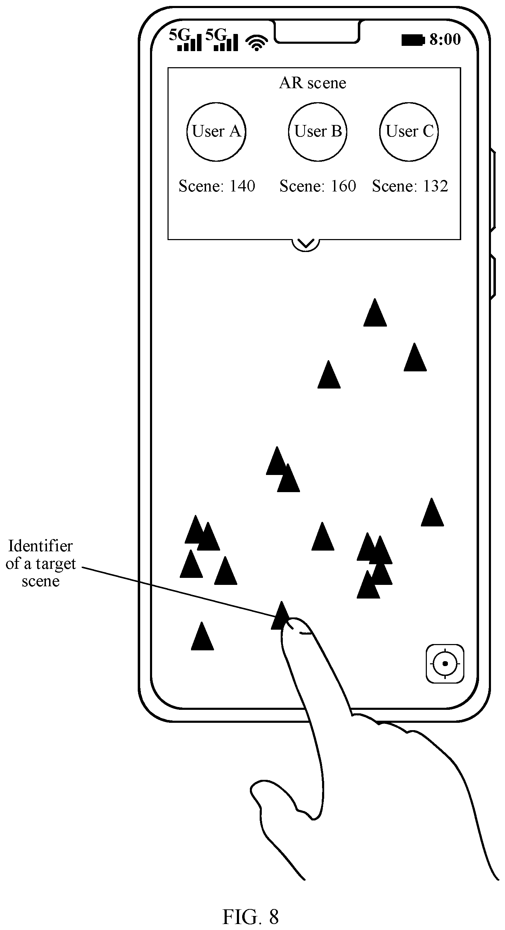

For example, FIG. 8 is a schematic diagram of a candidate scene according to an embodiment of this application. Refer to FIG. 8. After the user operates the electronic device to generate the three-dimensional map of the AR scene, the server may save the three-dimensional map of the AR scene, and display identifiers of a plurality of AR scenes on a user interface as the candidate scenes. The user may select the target scene from the plurality of candidate scenes, and this indicates that the user wants to operate the electronic device to enter and play in the target scene for a plurality of times. This manner helps the user enter and play in the AR scene again in which the three-dimensional map has been generated, and a step of the electronic device repeatedly generating the three-dimensional map is not needed.

In some embodiments, the electronic device may determine the geographical location of the electronic device after the electronic device receives the first instruction and before the electronic device sends the first user image to the server. For example, the electronic device may determine the geographical location of the electronic device based on the locating technology including the GPS positioning technology, the wireless fidelity (wireless fidelity, Wi-Fi) locating, the base station locating, or the like. When a distance between the geographical location of the electronic device and a geographical location corresponding to any panorama of the target scene is greater than a preset threshold, the electronic device may determine a first route based on the geographical location of the electronic device and the geographical location corresponding to any panorama of the target scene, and display the first route to the user, to guide the user to operate the electronic device based on the first route to move to a location near a target geographical location in a real environment corresponding to the target scene. After the user operates the electronic device to move to the location near the target geographical location, the electronic device captures the first user image via the photographing apparatus, and sends the first user image and the identifier of the target scene to the server.

S605: The server determines global feature information of the first user image.

Optionally, the global feature information of the first user image may be a global feature vector of the first user image.

It should be noted that for a manner in which the server determines the global feature information of the first user image, refer to the implementation of the manner in which the server determines the global feature information of the panorama slices in the foregoing embodiment. Details are not described herein again.

S606: The server determines a plurality of target panorama slices from panorama slices of a plurality of panoramas of the target scene based on the global feature information of the first user image.

In an optional implementation, the server may select the plurality of target panorama slices from the panorama slices of the plurality of panoramas of the target scene based on the global feature information of the first user image, where a similarity between global feature information of the target panorama slice and the global feature information of the first user image is greater than a preset threshold.

Optionally, when there are a large quantity of panoramas of the target scene, the server may determine the plurality of target panorama slices based on a VRS service to improve efficiency.

S607: The server determines a first relative location of the electronic device relative to the target geographical location based on target pose information of the plurality of target panorama slices.

In an optional implementation, the server may determine the first relative location of the electronic device relative to the target geographical location based on the VTPS service and the target pose information of the plurality of target panorama slices. In implementation, target pose information of each target panorama slice includes a location and an azimuth that are of the electronic device when the electronic device photographs the target panorama slice. The server may locate the electronic device based on the target pose information of the plurality of target panorama slices, and determine the first relative location of the electronic device relative to the target geographical location. It may be understood that, because the global feature information of the first user image is similar to the global feature information of the target panorama slices, an azimuth corresponding to the first user image and azimuths corresponding to the target panorama slices may be similar. In this case, a possible location that is of the electronic device when the electronic device photographs the first user image may be determined based on the target pose information of the target panorama slices. The electronic device is located based on the plurality of target panorama slices, to determine the first relative location of the electronic device. The first relative location may include an angle range and a distance range of the electronic device relative to the target geographical location.

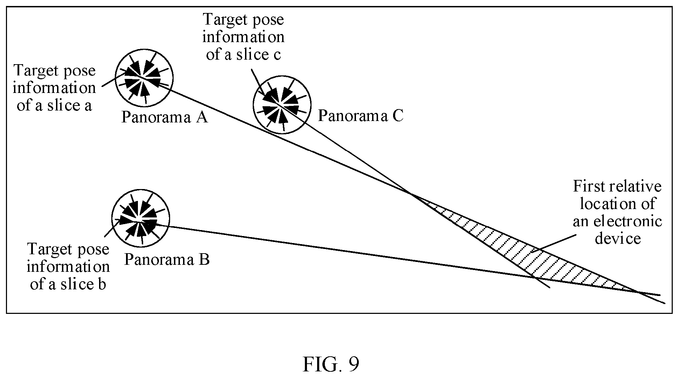

For example, FIG. 9 is a schematic diagram of determining a first relative location of an electronic device based on a VTPS according to an embodiment of this application. Refer to FIG. 9. The server may determine a target panorama slice that has a global feature vector whose similarity to the global feature vector of the first user image is greater than the preset threshold. For example, a similarity between global feature information of a slice a of a panorama A and the global feature vector of the first user image is greater than the preset threshold; a similarity between global feature information of a slice b of a panorama B and the global feature vector of the first user image is greater than the preset threshold; and a similarity between global feature information of a slice c of a panorama C and the global feature vector of the first user image is greater than the preset threshold. The first relative location that is of the electronic device and that is determined based on target pose information of the slice a, target pose information of the slice b, and the target pose information of the slice c may be as shown in a shaded area in FIG. 9. The first relative location may be the angle range and the distance range of the electronic device relative to the target geographical location.

It should be noted that the location information of the panorama stored in the server may be high-precision locating information obtained based on a technology including the Wi-Fi locating, GNSS locating, or the like. Because the high-precision locating information of the panorama has high reliability, when the first relative location of the electronic device is determined, a panorama slice of a panorama with the high-precision locating information may be preferentially selected as the target panorama slice, and this improves accuracy of the determined first relative location.

S608: The server sends the first relative location to the electronic device.

S609: The electronic device determines, based on the first relative location, a target route from a current location of the electronic device to the geographical location corresponding to the target scene.

In an optional implementation, the electronic device may select any angle from the angle range of the first relative location, and select any distance from the distance range to determine the target route. The electronic device may display the target route on the display. The target route may guide the user holding the electronic device to move to the target geographical location, in other words, guide the user holding the electronic device to enter an area in the real world corresponding to the target scene.

For example, the electronic device may render a navigation arrow based on the target route, and display the navigation arrow in a superimposed manner in the environment image that is photographed in real time by the photographing apparatus and that is displayed by the electronic device, to guide the user holding the electronic device to move to the target geographical location.

It should be noted that, when moving to the area in the real world corresponding to the target scene, the electronic device may send, to the server for a plurality of times, a user image captured by the photographing apparatus, to locate the electronic device for a plurality of times and adjust the target route according to S605 to S609, and accurately guide the user holding the electronic device to move to the target geographical location.

In some embodiments of this application, after the user holding the electronic device enters the area in the real world corresponding to the target scene, the electronic device may display the target scene based on the three-dimensional map corresponding to the target scene. Optionally, the server may determine a second relative location of the electronic device in the coordinate system of the three-dimensional map. The electronic device may display the target scene based on the second relative location in the coordinate system of the three-dimensional map, so that the virtual object placed by the user in the target scene and the environment image of the real world may be displayed in the superimposed manner on the display of the electronic device. In implementation, the electronic device may determine the second relative location of the electronic device in the coordinate system of the three-dimensional map based on a GVPS service that is in the server. For example, the electronic device may capture a second user image via the photographing apparatus. The electronic device sends the second user image to the server, and the server determines an environment image that includes an identical two-dimensional feature point as a two-dimensional feature point in the second user image and that is in a database. The server determines, based on a relationship between the two-dimensional feature point of the environment image and a three-dimensional point cloud of the three-dimensional map, a three-dimensional point cloud corresponding to the two-dimensional feature point included in the second user image, and determines the second relative location of the electronic device in the three-dimensional coordinate system of the three-dimensional map based on the three-dimensional point cloud corresponding to the two-dimensional feature point included in the second user image.

It should be noted that the electronic device that captures the environment image used to generate the three-dimensional map of the AR scene and the electronic device that requests locating by the server to enter the AR scene may be an identical electronic device, or may be different electronic devices. The electronic device that performs S601 and S602 and the electronic device that performs S604 and S609 may be different electronic devices in this embodiment of this application as shown in FIG. 6. In the manner, the user may operate the electronic device to enter and play in an AR scene created by another user.

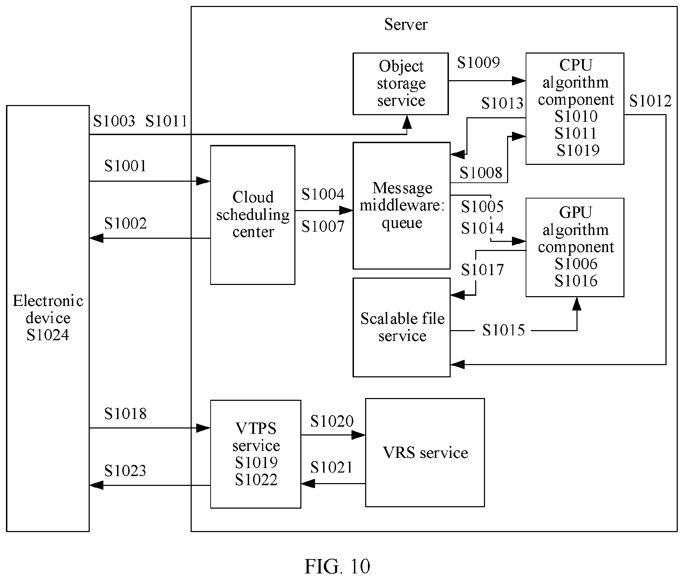

Based on the structure of the server shown in FIG. 5, the following further describes functions performed by the server in the augmented reality scene locating method according to an embodiment of this application. FIG. 10 is a schematic diagram of a procedure of an augmented reality scene locating method according to an embodiment of this application. Refer to FIG. 10. The method includes the following steps.

S1001: A cloud scheduling center receives a panorama slice upload request sent by an electronic device.

S1002: The cloud scheduling center sends a panorama slice upload link to the electronic device.

S1003: An object storage service receives a panorama slice sent by the electronic device through the panorama slice upload link.

S1004: After the electronic device completes uploading a panorama slice of a single panorama, the cloud scheduling center sends a panorama slice processing message to a message queue.

S1005: A GPU algorithm component listens and obtains a panorama slice processing task of the message queue.

S1006: The GPU algorithm component performs feature extraction and matching on the panorama slice.

S1007: After the electronic device completes uploading all panorama slices of the single panorama, the cloud scheduling center sends a panorama processing message to the message queue.

S1008: A CPU algorithm component listens and obtains the panorama slice processing task of the message queue.

S1009: The CPU algorithm component obtains a plurality of panorama slices from the object storage service.

S1010: The CPU algorithm component determines target pose information of each panorama slice.

The target pose information of each panorama slice is a pose that is of the electronic device relative in a three-dimensional coordinate system of a three-dimensional map and that is when the electronic device photographs the target panorama slice.

S1011: The CPU algorithm component splices the panorama slices based on target pose information of the plurality of panorama slices and matching pair information, to obtain the panorama.

S1012: The CPU algorithm component stores the panorama in a scalable file service.

S1013: The CPU algorithm component sends the panorama processing task to the message queue.

S1014: The GPU algorithm component listens and obtains the panorama processing task of the message queue.

S1015: The GPU algorithm component obtains the panorama from the scalable file service.

S1016: The GPU algorithm component performs global feature extraction on the panorama, to obtain global feature information of the panorama.

S1017: The GPU algorithm component stores the global feature information of the panorama in the scalable file service.

S1018: The electronic device sends a locating request to a VTPS service.

The locating request includes an identifier of a target scene, M first user images, and sensor information. The sensor information may be location information that is of the electronic device and that is when the electronic device captures the first user images. M is a positive integer, and M is generally less than or equal to 3.

S1019: The VTPS service extracts global feature information of the first user images.

S1020: The VTPS service sends the global feature information of the first user images and the sensor information to a VRS service.

S1021: The VRS service returns, to the VTPS service, M panorama slices whose global feature information is most similar to the global feature information of the first user images.

S1022: The VTPS service determines a first relative location of the electronic device based on target pose information of the M panorama slices.

The first relative location may be a maximum likelihood estimation location obtained through clustering the target pose information of the M panorama slices.

S1023: The VTPS service sends the first relative location to the electronic device.

S1024: The electronic device determines a target route based on the first relative location, renders a navigation arrow based on the target route, and displays the arrow to a user.

Optionally, in a process in which the user holding the electronic device keeps moving toward a direction to which the arrow points, the electronic device may capture a second user image and sensor information every time a distance is travelled or an interval is passed, and send the second user image and the sensor information to a GVPS service. The GVPS service locates the electronic device. If locating succeeds, the GVPS service obtains a precise relative location of the electronic device in a coordinate system of an AR scene, and sends the relative location to the electronic device. The electronic device displays the AR scene to the user based on the relative location. If the locating by the GVPS service on the electronic device fails, the GVPS service forwards the second user image and the sensor information to the VTPS service, and the VTPS service locates the electronic device for a next round.

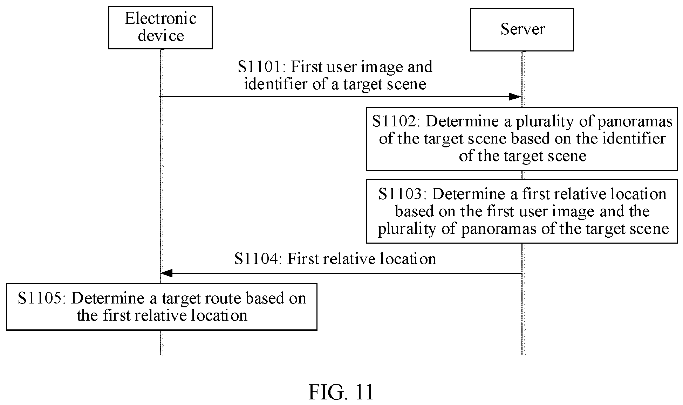

Based on the foregoing embodiments, this application further provides an augmented reality scene locating method. The method may be performed by the electronic device and the server in the augmented reality system shown in FIG. 2. The electronic device may include the structure shown in FIG. 3 and/or FIG. 4 according to this application, and the server may include the structure shown in FIG. 5 according to this application. FIG. 11 is a flowchart of an augmented reality scene locating method according to an embodiment of this application. Refer to FIG. 11. The method includes the following steps.

S1101: An electronic device sends a first user image and an identifier of a target scene to a server in response to a first instruction triggered by a user.

The first instruction is an instruction that is triggered by the user and that is for selecting the target scene from a plurality of candidate scenes. The first user image is an image obtained by the electronic device through photographing an environment at which the device is currently located.

S1102: The server determines a plurality of panoramas of the target scene based on the identifier of the target scene.

S1103: The server determines a first relative location based on the first user image and the plurality of panoramas of the target scene.

The first relative location is a location of the electronic device relative to a target geographical location, and the target geographical location is a geographical location of a real environment corresponding to the target scene.

S1104: The server sends the first relative location to the electronic device.

S1105: The electronic device determines a target route based on the first relative location.

The target route is a route from a current location of the electronic device to the target geographical location.

It should be noted that, for specific implementation of the augmented reality scene locating method shown in FIG. 11 according to this application, refer to implementation of the foregoing embodiments, and details are not described herein again.

Based on the foregoing embodiments, this application further provides an electronic device, and the electronic device includes a plurality of functional modules. The plurality of functional modules interact with each other, to implement functions performed by the electronic device in the methods described in embodiments of this application. For example, S601, S602, S604, and S609 in embodiments shown in FIG. 6 are performed. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, S601, S602, S604, and S609 in embodiments shown in FIG. 6 are performed.

Based on the foregoing embodiments, this application further provides a server. The server includes a plurality of functional modules. The plurality of functional modules interact with each other, to implement functions performed by the server in each method described in embodiments of this application. For example, S603 and S605 to S608 in embodiments shown in FIG. 6 are performed. The plurality of functional modules may be implemented based on software, hardware, or a combination of software and hardware, and the plurality of functional modules may be randomly combined or divided based on specific implementation.

Based on the foregoing embodiments, this application further provides a server. The server includes at least one processor and at least one memory. The at least one memory stores computer program instructions. When the electronic device runs, the at least one processor performs functions performed by the server in the methods described in embodiments of this application. For example, S603 and S605 to S608 in embodiments shown in FIG. 6 are performed.

Based on the foregoing embodiments, this application further provides a computer program. When the computer program is run on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, and is configured to support a computer apparatus in implementing the methods described in embodiments of this application. In a possible design, the chip system further includes a memory, and the memory is configured to store a program and data that are necessary for the computer apparatus. The chip system, may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims. The scope of protection is thus defined by the following claims.

## Claims

1. An augmented reality system, wherein the augmented reality system comprises an electronic device (11, 100) and a server (12);
the electronic device is configured to: send (S604) a first user image and an identifier of a target scene to the server in response to a first instruction triggered by a user, wherein the first instruction is an instruction that is triggered by the user and that is for selecting the target scene from a plurality of candidate scenes, and the first user image is an image obtained by the electronic device through photographing an environment at which the device is currently located; receive (S608) a first relative location sent by the server, wherein the first relative location is a location of the electronic device relative to a target geographical location, and the target geographical location is a geographical location of a real environment corresponding to the target scene; and determine (S609) a target route based on the first relative location, wherein the target route is a route from a current location of the electronic device to the target geographical location; and
the server is configured to: receive the first user image and the identifier of the target scene that are sent by the electronic device;
the augmented reality system **characterised in that** the server is further configured to: determine (S606) a plurality of panoramas of the target scene based on the identifier of the target scene; determine (S607) the first relative location based on the first user image and the plurality of panoramas of the target scene, and send the first relative location to the electronic device.

2. The system according to claim 1, wherein the server (12) is specifically configured to:
perform feature extraction on the first user image, and determine global feature information of the first user image;
determine a plurality of target panorama slices from panorama slices of the plurality of panoramas of the target scene based on the global feature information of the first user image, wherein a similarity between global feature information of each target panorama slice and the global feature information of the first user image is greater than a preset threshold;
obtain target pose information of each target panorama slice, wherein the target pose information of each target panorama slice indicates a location and an azimuth that are of the electronic device in a real world when the electronic device photographs the target panorama slice; and
determine the first relative location based on target pose information of the plurality of target panorama slices.

3. The system according to claim 2, wherein the first relative location comprises an angle range and a distance range of the electronic device (11, 100) relative to the target geographical location; and
the electronic device is specifically configured to:
select any angle value from the angle range, and select any distance value from the distance range; and
determine the target route based on the selected angle value and the selected distance value.

4. The system according to any one of claims 1 to 3, wherein the electronic device (11, 100) is further configured to:
render a navigation arrow based on the target route, and display an environment image currently photographed by the electronic device and the navigation arrow.

5. The system according to any one of claims 1 to 4, wherein
the electronic device (11, 100) is further configured to:
receive a three-dimensional map that is of the target scene and that is created by the server (12), and capture the plurality of panoramas of the target scene, wherein each panorama comprises a plurality of panorama slices; and
send the plurality of panoramas of the target scene to the server; and
the server is further configured to:
receive the plurality of panoramas uploaded by the electronic device, perform feature extraction on the plurality of panorama slices of each panorama, and determine global feature information of each panorama slice; and
determine target pose information of each panorama slice based on the three-dimensional map of the target scene and the global feature information of each panorama slice.

6. The system according to claim 5, wherein the server (12) is specifically configured to:
obtain a plurality of environment images corresponding to the target scene, and global feature information and a feature point of each environment image;
extract global feature information and a feature point of a first panorama slice, wherein the first panorama slice is any panorama slice of the plurality of panoramas;
determine, based on the global feature information of the first panorama slice, at least one environment image matching the first panorama slice, determine a three-dimensional point that is in the three-dimensional map and that corresponds to a feature point of the at least one environment image matching the first panorama slice, and use the determined three-dimensional point as a three-dimensional point corresponding to the feature point of the first panorama slice; and
determine target pose information of the first panorama slice based on the feature point of the first panorama slice, the three-dimensional point corresponding to the feature point of the first panorama slice, and an intrinsic camera parameter of the electronic device.

7. The system according to any one of claims 1 to 6, wherein
the electronic device (11, 100) is further configured to:
capture a second user image after moving to the target geographical location, wherein the second user image is an image obtained by the electronic device through photographing an environment at which the device is located after the electronic device moves to the target geographical location;
send the second user image to the server (12), and receive a second relative location returned by the server, wherein the second relative location is a location of the electronic device in a three-dimensional coordinate system of the three-dimensional map of the target scene; and
display the target scene based on the second relative location, the three-dimensional map, and the environment image captured by the electronic device in real time; and
the server is further configured to:
receive the second user image uploaded by the electronic device; and
determine the second relative location of the electronic device based on a global visual positioning system, GVPS, algorithm and the second user image, and send the second relative location to the electronic device.

8. An augmented reality scene locating method, applied to a server (12), wherein the method comprises:
receiving (S1101) a first user image and an identifier of a target scene that are sent by an electronic device (11, 100), wherein the first user image is an image obtained by the electronic device through photographing an environment at which the device is currently located, the target scene is determined by the electronic device in response to a first instruction, and the first instruction is an instruction that is triggered by a user and that is for selecting the target scene from a plurality of candidate scenes; and
determining (S1103) a plurality of panoramas of the target scene based on the identifier of the target scene;
the augmented reality scene locating method **characterised in that** it further comprises:
determining (S1103) a first relative location based on the first user image and the plurality of panoramas of the target scene, wherein the first relative location is a location of the electronic device relative to a target geographical location, and the target geographical location is a geographical location of a real environment corresponding to the target scene; and
sending (S1104) the first relative location to the electronic device, to enable the electronic device to determine a target route based on the first relative location, wherein the target route is a route from a current location of the electronic device to the target geographical location.

9. The method according to claim 8, wherein the determining (S1103) a first relative location based on the first user image and the plurality of panoramas of the target scene comprises:
performing feature extraction on the first user image, and determining global feature information of the first user image;
determining a plurality of target panorama slices from panorama slices of the plurality of panoramas of the target scene based on the global feature information of the first user image, wherein a similarity between global feature information of each target panorama slice and the global feature information of the first user image is greater than a preset threshold;
obtaining target pose information of each target panorama slice, wherein the target pose information of each target panorama slice indicates a location and an azimuth that are of the electronic device (11, 100) in a real world when the electronic device photographs the target panorama slice; and
determining the first relative location based on target pose information of the plurality of target panorama slices.

10. The method according to claim 9, wherein the first relative location comprises an angle range and a distance range of the electronic device (11, 100) relative to the target geographical location, and the target route is determined by the electronic device based on any angle value from the angle range and any distance value from the distance range.

11. The method according to any one of claims 8 to 10, wherein before the receiving (S1101) a first user image and an identifier of a target scene that are sent by an electronic device (11, 100), the method further comprises:
sending, to the electronic device, a three-dimensional map that is of the target scene and that is created by the server (12), and receiving the plurality of panoramas that are of the target scene and that are sent by the electronic device, wherein each panorama comprises a plurality of panorama slices;
performing feature extraction on the plurality of panorama slices of each panorama, and determining global feature information of each panorama slice; and
determining target pose information of each panorama slice based on the three-dimensional map of the target scene and the global feature information of each panorama slice.

12. The method according to claim 11, wherein the determining target pose information of each panorama slice based on the three-dimensional map of the target scene and the global feature information of each panorama slice comprises:
obtaining a plurality of environment images corresponding to the target scene, and global feature information and a feature point of each environment image;
extracting global feature information and a feature point of a first panorama slice, wherein the first panorama slice is any panorama slice of the plurality of panoramas;
determining, based on the global feature target of the first panorama slice, at least one environment image matching the first panorama slice, determining a three-dimensional point that is in the three-dimensional map and that corresponds to a feature point of the at least one environment image matching the first panorama slice, and using the determined three-dimensional point as a three-dimensional point corresponding to the feature point of the first panorama slice; and
determining target pose information of the first panorama slice based on the feature point of the first panorama slice, the three-dimensional point corresponding to the feature point of the first panorama slice, and an intrinsic camera parameter of the electronic device.

13. The method according to any one of claims 8 to 12, wherein the method further comprises:
receiving a second user image sent by the electronic device (11, 100), wherein the second user image is an image obtained by the electronic device through photographing an environment at which the device is located after the electronic device moves to the target geographical location; and
determining a second relative location of the electronic device based on a global visual positioning system, GVPS, algorithm and the second user image, and sending the second relative location to the electronic device, wherein the second relative location is a location of the electronic device in a three-dimensional coordinate system of the three-dimensional map of the target scene, to enable the electronic device to display the target scene based on the second relative location, the three-dimensional map, and the environment image captured by the electronic device in real time.

14. An augmented reality scene locating method, applied to an electronic device (11, 100), wherein the method comprises:
sending (S1101) a first user image and an identifier of a target scene to a server (12) in response to a first instruction triggered by a user, wherein the first instruction is an instruction that is triggered by the user and that is for selecting the target scene from a plurality of candidate scenes, and the first user image is an image obtained by the electronic device through photographing an environment at which the device is currently located;
the augmented reality scene locating method **characterised in that** it further comprises:
receiving (S1104) a first relative location sent by the server, wherein the first relative location is a location of the electronic device relative to a target geographical location, the target geographical location is a geographical location of a real environment corresponding to the target scene, and the first relative location is determined by the server based on the first user image and a plurality of panoramas of the target scene; and
determining (S1105) a target route based on the first relative location, wherein the target route is a route from a current location of the electronic device to the target geographical location.

15. The method according to claim 14, wherein the first relative location comprises an angle range and a distance range of the electronic device (11, 100) relative to the target geographical location; and
the determining (S1105) a target route based on the first relative location comprises:
selecting any angle value from the angle range, and selecting any distance value from the distance range; and determining, by the electronic device, the target route based on the selected angle value and the selected distance value.

## Patentansprüche

1. Erweiterte-Realität-System, wobei das Erweiterte-Realität-System ein elektronisches Gerät (11, 100) und einen Server (12) umfasst;
wobei das elektronische Gerät zu Folgendem konfiguriert ist: Senden (S604) eines ersten Benutzerbildes und einer Kennung einer Zielszene an den Server als Reaktion auf eine durch einen Benutzer ausgelöste erste Anweisung, wobei die erste Anweisung eine Anweisung ist, die durch den Benutzer ausgelöst wird und die zum Auswählen der Zielszene aus mehreren Kandidatenszenen dient, und das erste Benutzerbild ein Bild ist, das durch das elektronische Gerät durch Fotografieren einer Umgebung erhalten wird, in der sich das Gerät aktuell befindet; Empfangen (S608) eines durch den Server gesendeten ersten relativen Standorts, wobei der erste relative Standort ein Standort des elektronischen Geräts relativ zu einem geografischen Zielstandort ist und der geografische Zielstandort ein geografischer Standort einer realen Umgebung ist, die der Zielszene entspricht; und Bestimmen (S609) einer Zielroute basierend auf dem ersten relativen Standort, wobei die Zielroute eine Route von einem aktuellen Standort des elektronischen Geräts zu dem geografischen Zielstandort ist; und
wobei der Server zu Folgendem konfiguriert ist: Empfangen des ersten Benutzerbildes und der Kennung der Zielszene, die durch das elektronische Gerät gesendet werden;
wobei das Erweiterte-Realität-System **dadurch gekennzeichnet ist, dass** der Server ferner zu Folgendem konfiguriert ist: Bestimmen (S606) mehrerer Panoramen der Zielszene basierend auf der Kennung der Zielszene; Bestimmen (S607) des ersten relativen Standorts basierend auf dem ersten Benutzerbild und den mehreren Panoramen der Zielszene, und Senden des ersten relativen Standorts an das elektronische Gerät.

2. System nach Anspruch 1, wobei der Server (12) insbesondere zu Folgendem konfiguriert ist:
Durchführen einer Merkmalsextraktion an dem ersten Benutzerbild, und Bestimmen globaler Merkmalsinformationen des ersten Benutzerbildes;
Bestimmen mehrerer Zielpanoramaausschnitte aus Panoramaausschnitten der mehreren Panoramen der Zielszene basierend auf den globalen Merkmalsinformationen des ersten Benutzerbildes, wobei eine Ähnlichkeit zwischen globalen Merkmalsinformationen jedes Zielpanoramaausschnitts und den globalen Merkmalsinformationen des ersten Benutzerbildes größer als ein voreingestellter Schwellenwert ist;
Erhalten von Zielpositionsinformationen jedes Zielpanoramaausschnitts, wobei die Zielpositionsinformationen jedes Zielpanoramaausschnitts einen Standort und einen Azimut angeben, die diejenigen des elektronischen Geräts in einer realen Welt sind, wenn die elektronische Gerät den Zielpanoramaausschnitt fotografiert; und
Bestimmen des ersten relativen Standorts basierend auf Zielpositionsinformationen der mehreren Zielpanoramaausschnitte.

3. System nach Anspruch 2, wobei der erste relative Standort einen Winkelbereich und einen Abstandsbereich des elektronischen Geräts (11, 100) relativ zu dem geografischen Zielstandort umfasst; und
wobei das elektronische Gerät insbesondere zu Folgendem konfiguriert ist:
Auswählen eines beliebigen Winkelwerts aus dem Winkelbereich, und Auswählen eines beliebigen Abstandswerts aus dem Abstandsbereich; und
Bestimmen der Zielroute basierend auf dem ausgewählten Winkelwert und dem ausgewählten Abstandswert.

4. System nach einem der Ansprüche 1 bis 3, wobei das elektronische Gerät (11, 100) ferner zu Folgendem konfiguriert ist:
Rendern eines Navigationspfeils basierend auf der Zielroute, und Anzeigen eines aktuell durch das elektronische Gerät fotografierten Umgebungsbildes und des Navigationspfeils.

5. System nach einem der Ansprüche 1 bis 4, wobei
das elektronische Gerät (11, 100) ferner zu Folgendem konfiguriert ist:
Empfangen einer dreidimensionalen Karte, die von der Zielszene ist und die durch den Server (12) erzeugt wird, und Erfassen der mehreren Panoramen der Zielszene, wobei jedes Panorama mehrere Panoramaausschnitte umfasst; und
Senden der mehreren Panoramen der Zielszene an den Server; und
der Server ferner zu Folgendem konfiguriert ist:
Empfangen der durch das elektronische Gerät hochgeladenen mehreren Panoramen, Durchführen einer Merkmalsextraktion an den mehreren Panoramaausschnitten jedes Panoramas, und Bestimmen globaler Merkmalsinformationen jedes Panoramaausschnitts; und
Bestimmen von Zielpositionsinformationen jedes Panoramaausschnitts basierend auf der dreidimensionalen Karte der Zielszene und den globalen Merkmalsinformationen jedes Panoramaausschnitts.

6. System nach Anspruch 5, wobei der Server (12) insbesondere zu Folgendem konfiguriert ist:
Erhalten mehrerer Umgebungsbilder, die der Zielszene entsprechen, und globaler Merkmalsinformationen und eines Merkmalspunkts jedes Umgebungsbildes;
Extrahieren globaler Merkmalsinformationen und eines Merkmalspunkts eines ersten Panoramaausschnitts, wobei der erste Panoramaausschnitt ein beliebiger Panoramaausschnitt der mehreren Panoramen ist;
Bestimmen, basierend auf den globalen Merkmalsinformationen des ersten Panoramaausschnitts, mindestens eines Umgebungsbildes, das mit dem ersten Panoramaausschnitt übereinstimmt, Bestimmen eines dreidimensionalen Punkts, der sich in der dreidimensionalen Karte befindet und der einem Merkmalspunkt des mindestens einen Umgebungsbildes entspricht, das mit dem ersten Panoramaausschnitt übereinstimmt, und Verwenden des bestimmten dreidimensionalen Punkts als einen dreidimensionalen Punkt, der dem Merkmalspunkt des ersten Panoramaausschnitts entspricht; und
Bestimmen von Zielpositionsinformationen des ersten Panoramaausschnitts basierend auf dem Merkmalspunkt des ersten Panoramaausschnitts, dem dreidimensionalen Punkt, der dem Merkmalspunkt des ersten Panoramaausschnitts entspricht, und einem intrinsischen Kameraparameter des elektronischen Geräts.

7. System nach einem der Ansprüche 1 bis 6, wobei
das elektronische Gerät (11, 100) ferner zu Folgendem konfiguriert ist:
Erfassen eines zweiten Benutzerbildes nach Bewegen zu dem geografischen Zielstandort, wobei das zweite Benutzerbild ein Bild ist, das durch das elektronische Gerät durch Fotografieren einer Umgebung erhalten wird, in der sich das Gerät befindet, nachdem sich das elektronische Gerät zu dem geografischen Zielstandort bewegt;
Senden des zweiten Benutzerbildes an den Server (12), und Empfangen eines durch den Server zurückgegebenen zweiten relativen Standorts, wobei der zweite relative Standort ein Standort des elektronischen Geräts in einem dreidimensionalen Koordinatensystem der dreidimensionalen Karte der Zielszene ist; und
Anzeigen der Zielszene basierend auf dem zweiten relativen Standort, der dreidimensionalen Karte und dem durch das elektronische Gerät aufgenommenen Umgebungsbild in Echtzeit; und
der Server ferner zu Folgendem konfiguriert ist:
Empfangen des durch das elektronische Gerät hochgeladenen zweiten Benutzerbildes; und
Bestimmen des zweiten relativen Standorts des elektronischen Geräts basierend auf einem "Global Visual Positioning System"-, GVPS-, Algorithmus und dem zweiten Benutzerbild, und Senden des zweiten relativen Standorts an das elektronische Gerät.

8. Erweiterte-Realität-Szenenstandortbestimmungsverfahren, das auf einen Server (12) angewendet wird, wobei das Verfahren Folgendes umfasst:
Empfangen (S1101) eines ersten Benutzerbildes und einer Kennung einer Zielszene, die durch ein elektronisches Gerät (11, 100) gesendet werden, wobei das erste Benutzerbild ein Bild ist, das durch das elektronische Gerät durch Fotografieren einer Umgebung erhalten wird, in der sich das Gerät aktuell befindet, wobei die Zielszene durch das elektronische Gerät als Reaktion auf eine erste Anweisung bestimmt wird und die erste Anweisung eine Anweisung ist, die durch einen Benutzer ausgelöst wird und die zum Auswählen der Zielszene aus mehreren Kandidatenszenen dient; und
Bestimmen (S1103) mehrerer Panoramen der Zielszene basierend auf der Kennung der Zielszene;
wobei das Erweiterte-Realität-Szenenstandortbestimmungsverfahren **dadurch gekennzeichnet ist, dass** es ferner Folgendes umfasst:
Bestimmen (S1103) eines ersten relativen Standorts basierend auf dem ersten Benutzerbild und den mehreren Panoramen der Zielszene, wobei der erste relative Standort ein Standort des elektronischen Geräts relativ zu einem geografischen Zielstandort ist und der geografische Zielstandort ein geografischer Standort einer realen Umgebung ist, die der Zielszene entspricht; und
Senden (S1104) des ersten relativen Standorts an das elektronische Gerät, um dem elektronischen Gerät zu ermöglichen, eine Zielroute basierend auf dem ersten relativen Standort zu bestimmen, wobei die Zielroute eine Route von einem aktuellen Standort des elektronischen Geräts zu dem geografischen Zielstandort ist.

9. Verfahren nach Anspruch 8, wobei das Bestimmen (S1103) eines ersten relativen Standorts basierend auf dem ersten Benutzerbild und den mehreren Panoramen der Zielszene Folgendes umfasst:
Durchführen einer Merkmalsextraktion an dem ersten Benutzerbild, und Bestimmen globaler Merkmalsinformationen des ersten Benutzerbildes;
Bestimmen mehrerer Zielpanoramaausschnitte aus Panoramaausschnitten der mehreren Panoramen der Zielszene basierend auf den globalen Merkmalsinformationen des ersten Benutzerbildes, wobei eine Ähnlichkeit zwischen globalen Merkmalsinformationen jedes Zielpanoramaausschnitts und den globalen Merkmalsinformationen des ersten Benutzerbildes größer als ein voreingestellter Schwellenwert ist;
Erhalten von Zielpositionsinformationen jedes Zielpanoramaausschnitts, wobei die Zielpositionsinformationen jedes Zielpanoramaausschnitts einen Standort und einen Azimut angeben, die diejenigen des elektronischen Geräts (11, 100) in einer realen Welt sind, wenn das elektronische Gerät den Zielpanoramaausschnitt fotografiert; und
Bestimmen des ersten relativen Standorts basierend auf Zielpositionsinformationen der mehreren Zielpanoramaausschnitte.

10. Verfahren nach Anspruch 9, wobei der erste relative Standort einen Winkelbereich und einen Abstandsbereich des elektronischen Geräts (11, 100) relativ zu dem geografischen Zielstandort umfasst und die Zielroute durch das elektronische Gerät basierend auf einem beliebigen Winkelwert aus dem Winkelbereich und einem beliebigen Abstandswert aus dem Abstandsbereich bestimmt wird.

11. Verfahren nach einem der Ansprüche 8 bis 10, wobei vor dem Empfangen (S1101) eines ersten Benutzerbildes und einer Kennung einer Zielszene, die durch ein elektronisches Gerät (11, 100) gesendet werden, das Verfahren ferner Folgendes umfasst:
Senden, an das elektronische Gerät, einer dreidimensionalen Karte, die von der Zielszene ist und die durch den Server (12) erzeugt wird, und Empfangen der mehreren Panoramen, die von der Zielszene sind und die durch das elektronische Gerät gesendet werden, wobei jedes Panorama mehrere Panoramaausschnitte umfasst;
Durchführen einer Merkmalsextraktion an den mehreren Panoramaausschnitten jedes Panoramas, und Bestimmen globaler Merkmalsinformationen jedes Panoramaausschnitts; und
Bestimmen von Zielpositionsinformationen jedes Panoramaausschnitts basierend auf der dreidimensionalen Karte der Zielszene und den globalen Merkmalsinformationen jedes Panoramaausschnitts.

12. Verfahren nach Anspruch 11, wobei das Bestimmen von Zielpositionsinformationen jedes Panoramaausschnitts basierend auf der dreidimensionalen Karte der Zielszene und den globalen Merkmalsinformationen jedes Panoramaausschnitts Folgendes umfasst:
Erhalten mehrerer Umgebungsbilder, die der Zielszene entsprechen, und globaler Merkmalsinformationen und eines Merkmalspunkts jedes Umgebungsbildes;
Extrahieren globaler Merkmalsinformationen und eines Merkmalspunkts eines ersten Panoramaausschnitts, wobei der erste Panoramaausschnitt ein beliebiger Panoramaausschnitt der mehreren Panoramen ist;
Bestimmen, basierend auf dem globalen Merkmalsziel des ersten Panoramaausschnitts, mindestens eines Umgebungsbildes, das mit dem ersten Panoramaausschnitt übereinstimmt, Bestimmen eines dreidimensionalen Punkts, der sich in der dreidimensionalen Karte befindet und der einem Merkmalspunkt des mindestens einen Umgebungsbildes entspricht, das mit dem ersten Panoramaausschnitt übereinstimmt, und Verwenden des bestimmten dreidimensionalen Punkts als einen dreidimensionalen Punkt, der dem Merkmalspunkt des ersten Panoramaausschnitts entspricht; und
Bestimmen von Zielpositionsinformationen des ersten Panoramaausschnitts basierend auf dem Merkmalspunkt des ersten Panoramaausschnitts, dem dreidimensionalen Punkt, der dem Merkmalspunkt des ersten Panoramaausschnitts entspricht, und einem intrinsischen Kameraparameter des elektronischen Geräts.

13. Verfahren nach einem der Ansprüche 8 bis 12, wobei das Verfahren ferner Folgendes umfasst:
Empfangen eines durch das elektronische Gerät (11, 100) gesendeten zweiten Benutzerbildes, wobei das zweite Benutzerbild ein Bild ist, das durch das elektronische Gerät durch Fotografieren einer Umgebung erhalten wird, in der sich das Gerät befindet, nachdem sich das elektronische Gerät zu dem geografischen Zielstandort bewegt; und
Bestimmen eines zweiten relativen Standorts des elektronischen Geräts basierend auf einem "Global Visual Positioning System"-, GVPS-, Algorithmus und dem zweiten Benutzerbild, und Senden des zweiten relativen Standorts an das elektronische Gerät, wobei der zweite relative Standort ein Standort des elektronischen Geräts in einem dreidimensionalen Koordinatensystem der dreidimensionalen Karte der Zielszene ist, um dem elektronischen Gerät zu ermöglichen, die Zielszene basierend auf dem zweiten relativen Standort, der dreidimensionalen Karte und dem durch das elektronische Gerät aufgenommenen Umgebungsbild in Echtzeit anzuzeigen.

14. Erweiterte-Realität-Szenenstandortbestimmungsverfahren, das auf ein elektronisches Gerät (11, 100) angewendet wird, wobei das Verfahren Folgendes umfasst:
Senden (S1101) eines ersten Benutzerbildes und einer Kennung einer Zielszene an einen Server (12) als Reaktion auf eine durch einen Benutzer ausgelöste erste Anweisung, wobei die erste Anweisung eine Anweisung ist, die durch den Benutzer ausgelöst wird und die zum Auswählen der Zielszene aus mehreren Kandidatenszenen dient, und das erste Benutzerbild ein Bild ist, das durch das elektronische Gerät durch Fotografieren einer Umgebung erhalten wird, in der sich das Gerät aktuell befindet;
wobei das Erweiterte-Realität-Szenenstandortbestimmungsverfahren **dadurch gekennzeichnet ist, dass** es ferner Folgendes umfasst:
Empfangen (S1104) eines durch den Server gesendeten ersten relativen Standorts, wobei der erste relative Standort ein Standort des elektronischen Geräts relativ zu einem geografischen Zielstandort ist, wobei der geografische Zielstandort ein geografischer Standort einer realen Umgebung ist, die der Zielszene entspricht, und der erste relative Standort durch den Server basierend auf dem ersten Benutzerbild und mehreren Panoramen der Zielszene bestimmt wird; und
Bestimmen (S1105) einer Zielroute basierend auf dem ersten relativen Standort, wobei die Zielroute eine Route von einem aktuellen Standort des elektronischen Geräts zu dem geografischen Zielstandort ist.

15. Verfahren nach Anspruch 14, wobei der erste relative Standort einen Winkelbereich und einen Abstandsbereich des elektronischen Geräts (11, 100) relativ zu dem geografischen Zielstandort umfasst; und
wobei das Bestimmen (S1105) einer Zielroute basierend auf dem ersten relativen Standort Folgendes umfasst:
Auswählen eines beliebigen Winkelwerts aus dem Winkelbereich und Auswählen eines beliebigen Abstandswerts aus dem Abstandsbereich; und Bestimmen, durch das elektronische Gerät, der Zielroute basierend auf dem ausgewählten Winkelwert und dem ausgewählten Abstandswert.

## Revendications

1. Système de réalité augmentée, le système de réalité augmentée comprenant un dispositif électronique (11, 100) et un serveur (12) ;
le dispositif électronique étant configuré pour : envoyer (S604) une première image utilisateur et un identifiant d'une scène cible au serveur en réponse à une première instruction déclenchée par un utilisateur, la première instruction étant une instruction déclenchée par l'utilisateur et destinée à sélectionner la scène cible parmi une pluralité de scènes candidates, et la première image utilisateur étant une image obtenue par le dispositif électronique en photographiant un environnement dans lequel le dispositif est actuellement situé ; recevoir (S608) un premier emplacement relatif envoyé par le serveur, le premier emplacement relatif étant un emplacement du dispositif électronique par rapport à un emplacement géographique cible, et l'emplacement géographique cible étant un emplacement géographique d'un environnement réel correspondant à la scène cible ; et déterminer (S609) un itinéraire cible sur la base du premier emplacement relatif, l'itinéraire cible étant un itinéraire allant d'un emplacement actuel du dispositif électronique à l'emplacement géographique cible ; et
le serveur étant configuré pour : recevoir la première image utilisateur et l'identifiant de la scène cible envoyés par le dispositif électronique ;
le système de réalité augmentée étant **caractérisé en ce que** le serveur est en outre configuré pour : déterminer (S606) une pluralité de panoramas de la scène cible sur la base de l'identifiant de la scène cible ; déterminer (S607) le premier emplacement relatif sur la base de la première image utilisateur et de la pluralité de panoramas de la scène cible, et envoyer le premier emplacement relatif au dispositif électronique.

2. Système selon la revendication 1, le serveur (12) étant spécifiquement configuré pour :
réaliser une extraction de caractéristiques sur la première image utilisateur et déterminer des informations de caractéristiques globales de la première image utilisateur ;
déterminer une pluralité de tranches de panorama cible à partir de tranches de panorama de la pluralité de panoramas de la scène cible sur la base des informations de caractéristiques globales de la première image utilisateur, une similarité entre des informations de caractéristiques globales de chaque tranche de panorama cible et les informations de caractéristiques globales de la première image utilisateur étant supérieure à un seuil prédéterminé ;
obtenir des informations de pose cible de chaque tranche de panorama cible, les informations de pose cible de chaque tranche de panorama cible indiquant un emplacement et un azimut qui sont du dispositif électronique dans un monde réel lorsque le dispositif électronique photographie la tranche de panorama cible ; et
déterminer le premier emplacement relatif sur la base des informations de pose cible de la pluralité de tranches de panorama cible.

3. Système selon la revendication 2, le premier emplacement relatif comprenant une plage angulaire et une plage de distance du dispositif électronique (11, 100) par rapport à l'emplacement géographique cible ; et
le dispositif électronique étant spécifiquement configuré pour :
sélectionner n'importe quelle valeur d'angle dans la plage angulaire, et sélectionner n'importe quelle valeur de distance dans la plage de distance ; et
déterminer l'itinéraire cible sur la base de la valeur d'angle sélectionnée et de la valeur de distance sélectionnée.

4. Système selon l'une quelconque des revendications 1 à 3, le dispositif électronique (11, 100) étant en outre configuré pour :
générer une flèche de navigation sur la base de l'itinéraire cible et afficher une image d'environnement actuellement photographiée par le dispositif électronique et la flèche de navigation.

5. Système selon l'une quelconque des revendications 1 à 4,
le dispositif électronique (11, 100) étant en outre configuré pour :
recevoir une carte tridimensionnelle qui est de la scène cible et qui est créée par le serveur (12), et capturer la pluralité de panoramas de la scène cible, chaque panorama comprenant une pluralité de tranches de panorama ; et
envoyer la pluralité de panoramas de la scène cible au serveur ; et
le serveur étant en outre configuré pour :
recevoir la pluralité de panoramas téléchargés par le dispositif électronique, réaliser une extraction de caractéristiques sur la pluralité de tranches de panorama de chaque panorama, et déterminer des informations de caractéristiques globales de chaque tranche de panorama ; et
déterminer des informations de pose cible de chaque tranche de panorama sur la base de la carte tridimensionnelle de la scène cible et des informations de caractéristiques globales de chaque tranche de panorama.

6. Système selon la revendication 5, le serveur (12) étant spécifiquement configuré pour :
obtenir une pluralité d'images d'environnement correspondant à la scène cible, et des informations de caractéristiques globales et un point de caractéristiques de chaque image d'environnement ;
extraire des informations de caractéristiques globales et un point de caractéristiques d'une première tranche de panorama, la première tranche de panorama étant une tranche de panorama quelconque de la pluralité de panoramas ;
déterminer, sur la base des informations de caractéristiques globales de la première tranche de panorama, au moins une image d'environnement correspondant à la première tranche de panorama, déterminer un point tridimensionnel qui se trouve dans la carte tridimensionnelle et qui correspond à un point caractéristique de l'au moins une image d'environnement correspondant à la première tranche de panorama, et utiliser le point tridimensionnel déterminé comme point tridimensionnel correspondant au point caractéristique de la première tranche de panorama ; et
déterminer des informations de pose cible de la première tranche de panorama sur la base du point caractéristique de la première tranche de panorama, du point tridimensionnel correspondant au point caractéristique de la première tranche de panorama, et d'un paramètre de caméra intrinsèque du dispositif électronique.

7. Système selon l'une quelconque des revendications 1 à 6,
le dispositif électronique (11, 100) étant en outre configuré pour :
capturer une deuxième image utilisateur après le déplacement jusqu'à l'emplacement géographique cible, la deuxième image utilisateur étant une image obtenue par le dispositif électronique en photographiant un environnement dans lequel se trouve le dispositif après le déplacement du dispositif électronique à l'emplacement géographique cible ;
envoyer la deuxième image utilisateur au serveur (12), et recevoir un deuxième emplacement relatif renvoyé par le serveur, le deuxième emplacement relatif étant un emplacement du dispositif électronique dans un système de coordonnées tridimensionnelles de la carte tridimensionnelle de la scène cible ; et
afficher en temps réel la scène cible sur la base du deuxième emplacement relatif, de la carte tridimensionnelle et de l'image d'environnement capturée par le dispositif électronique ; et
le serveur étant en outre configuré pour :
recevoir la deuxième image utilisateur chargée par le dispositif électronique ; et
déterminer le deuxième emplacement relatif du dispositif électronique sur la base d'un algorithme de système de positionnement visuel global, GVPS, et de la deuxième image utilisateur, et envoyer le deuxième emplacement relatif au dispositif électronique.

8. Procédé de localisation de scène de réalité augmentée appliqué à un serveur (12), le procédé comprenant :
la réception (S1101) d'une première image utilisateur et d'un identifiant d'une scène cible envoyés par un dispositif électronique (11, 100), la première image utilisateur étant une image obtenue par le dispositif électronique en photographiant un environnement dans lequel le dispositif est actuellement situé, la scène cible étant déterminée par le dispositif électronique en réponse à une première instruction, et la première instruction étant une instruction déclenchée par un utilisateur qui est destinée à sélectionner la scène cible parmi une pluralité de scènes candidates ; et
la détermination (S1103) d'une pluralité de panoramas de la scène cible sur la base de l'identifiant de la scène cible ;
le procédé de localisation de scène de réalité augmentée **caractérisé en ce qu'**il comprend en outre :
la détermination (S1103) d'un premier emplacement relatif sur la base de la première image utilisateur et de la pluralité de panoramas de la scène cible, le premier emplacement relatif étant un emplacement du dispositif électronique par rapport à un emplacement géographique cible, et l'emplacement géographique cible étant un emplacement géographique d'un environnement réel correspondant à la scène cible ; et
l'envoi (S1104) du premier emplacement relatif au dispositif électronique, pour permettre au dispositif électronique de déterminer un itinéraire cible sur la base du premier emplacement relatif, l'itinéraire cible étant un itinéraire d'un emplacement actuel du dispositif électronique à l'emplacement géographique cible.

9. Procédé selon la revendication 8, la détermination (S1103) d'un premier emplacement relatif sur la base de la première image utilisateur et de la pluralité de panoramas de la scène cible comprenant :
la réalisation d'une extraction de caractéristiques sur la première image utilisateur et la détermination d'informations de caractéristiques globales de la première image utilisateur ;
la détermination d'une pluralité de tranches de panorama cible à partir de tranches de panorama de la pluralité de panoramas de la scène cible sur la base des informations de caractéristiques globales de la première image utilisateur, une similarité entre des informations de caractéristiques globales de chaque tranche de panorama cible et des informations de caractéristiques globales de la première image utilisateur étant supérieure à un seuil prédéterminé ;
l'obtention d'informations de pose cible de chaque tranche de panorama cible, les informations de pose cible de chaque tranche de panorama cible indiquant un emplacement et un azimut qui sont du dispositif électronique (11, 100) dans un monde réel lorsque le dispositif électronique photographie la tranche de panorama cible ; et
la détermination du premier emplacement relatif sur la base d'informations de pose cible de la pluralité de tranches de panorama cible.

10. Procédé selon la revendication 9, le premier emplacement relatif comprenant une plage angulaire et une plage de distance du dispositif électronique (11, 100) par rapport à l'emplacement géographique cible, et l'itinéraire cible étant déterminé par le dispositif électronique sur la base d'une valeur angulaire quelconque à partir de la plage angulaire et d'une valeur de distance quelconque à partir de la plage de distance.

11. Procédé selon l'une quelconque des revendications 8 à 10, avant la réception (S1101) d'une première image utilisateur et d'un identifiant d'une scène cible envoyés par un dispositif électronique (11, 100), le procédé comprenant en outre :
l'envoi au dispositif électronique d'une carte tridimensionnelle de la scène cible créée par le serveur (12), et la réception de la pluralité de panoramas qui sont de la scène cible envoyés par le dispositif électronique, chaque panorama comprenant une pluralité de tranches de panorama ;
la réalisation d'une extraction de caractéristiques sur la pluralité de tranches de panorama de chaque panorama, et la détermination d'informations caractéristiques globales de chaque tranche de panorama ; et
la détermination d'informations de pose cible de chaque tranche de panorama sur la base de la carte tridimensionnelle de la scène cible et des informations de caractéristiques globales de chaque tranche de panorama.

12. Procédé selon la revendication 11, la détermination d'informations de pose cible de chaque tranche de panorama sur la base de la carte tridimensionnelle de la scène cible et des informations de caractéristiques globales de chaque tranche de panorama comprenant :
l'obtention d'une pluralité d'images d'environnement correspondant à la scène cible, et des informations de caractéristiques globales et un point de caractéristiques de chaque image d'environnement ;
l'extraction d'informations de caractéristiques globales et d'un point de caractéristiques d'une première tranche de panorama, la première tranche de panorama étant une tranche de panorama quelconque de la pluralité de panoramas ;
la détermination, sur la base des informations de caractéristiques globales de la première tranche de panorama, d'au moins une image d'environnement correspondant à la première tranche de panorama, la détermination d'un point tridimensionnel qui se trouve dans la carte tridimensionnelle et qui correspond à un point caractéristique de l'au moins une image d'environnement correspondant à la première tranche de panorama, et l'utilisation du point tridimensionnel déterminé comme point tridimensionnel correspondant au point caractéristique de la première tranche de panorama ; et
la détermination d'informations de pose cible de la première tranche de panorama sur la base du point caractéristique de la première tranche de panorama, du point tridimensionnel correspondant au point caractéristique de la première tranche de panorama, et d'un paramètre de caméra intrinsèque du dispositif électronique.

13. Procédé selon l'une quelconque des revendications 8 à 12, le procédé comprenant en outre :
la réception d'une deuxième image utilisateur envoyée par le dispositif électronique (11, 100), la deuxième image utilisateur étant une image obtenue par le dispositif électronique en photographiant un environnement dans lequel se trouve le dispositif après le déplacement du dispositif électronique à l'emplacement géographique cible ; et
la détermination d'un deuxième emplacement relatif du dispositif électronique sur la base d'un algorithme de système de positionnement visuel global, GVPS, et la deuxième image utilisateur, et l'envoi du deuxième emplacement relatif au dispositif électronique, le deuxième emplacement relatif étant un emplacement du dispositif électronique dans un système de coordonnées tridimensionnelles de la carte tridimensionnelle de la scène cible, pour permettre au dispositif électronique d'afficher la scène cible sur la base du deuxième emplacement relatif, de la carte tridimensionnelle, et de l'image d'environnement capturée par le dispositif électronique en temps réel.

14. Procédé de localisation de scène de réalité augmentée appliqué à un dispositif électronique (11, 100), le procédé comprenant :
l'envoi (S1101) d'une première image utilisateur et d'un identifiant d'une scène cible à un serveur (12) en réponse à une première instruction déclenchée par un utilisateur, la première instruction étant une instruction déclenchée par l'utilisateur et destinée à sélectionner la scène cible parmi une pluralité de scènes candidates, et la première image utilisateur étant une image obtenue par le dispositif électronique en photographiant un environnement dans lequel le dispositif est actuellement situé ;
le procédé de localisation de scène de réalité augmentée **caractérisé en ce qu'**il comprend en outre :
la réception (S1104) d'un premier emplacement relatif envoyé par le serveur, le premier emplacement relatif étant un emplacement du dispositif électronique par rapport à un emplacement géographique cible, l'emplacement géographique cible étant un emplacement géographique d'un environnement réel correspondant à la scène cible, et le premier emplacement relatif étant déterminé par le serveur sur la base de la première image utilisateur et d'une pluralité de panoramas de la scène cible ; et
la détermination (S1105) d'un itinéraire cible sur la base du premier emplacement relatif, l'itinéraire cible étant un itinéraire allant d'un emplacement actuel du dispositif électronique à l'emplacement géographique cible.

15. Procédé selon la revendication 14, le premier emplacement relatif comprenant une plage angulaire et une plage de distance du dispositif électronique (11, 100) par rapport à l'emplacement géographique cible ; et
la détermination (S1105) d'un itinéraire cible sur la base du premier emplacement relatif comprenant :
la sélection d'une valeur d'angle dans la plage angulaire et la sélection d'une valeur de distance dans la plage de distances ; et la détermination, par le dispositif électronique, de l'itinéraire cible sur la base de la valeur d'angle sélectionnée et de la valeur de distance sélectionnée.
